# EUROPEAN PATENT SPECIFICATION

(11) **EP 4 617 037 B1**
(45) Date of publication and mention of the grant of the patent: **09.12.2026**
(21) Application number: 25162866.5
(22) Date of filing: 11.03.2025
(51) Int. Cl.: B29C 44/14, B29C 44/30, B29C 44/32, B29D 99/00, B65G 15/14, B65G 23/24, B65G 23/44, B65G 43/00, B65G 43/04, B29C 31/00

(54) **APPARATUS FOR THE CONTINUOUS PRODUCTION OF A PANEL, PROVIDED WITH A DEVICE WITH TRANSDUCERS FOR ACTUATING, CONTROLLING AND MONITORING THE TENSIONING AND/OR TRACTION CONDITIONS, AND RELATED METHOD**
VORRICHTUNG ZUR KONTINUIERLICHEN HERSTELLUNG EINER PLATTE MIT WANDLERN ZUR BETÄTIGUNG, STEUERUNG UND ÜBERWACHUNG DER SPANN- UND/ODER ZUGBEDINGUNGEN UND ZUGEHÖRIGES VERFAHREN
DISPOSITIF POUR LA FABRICATION EN CONTINU D'UN PANNEAU, MUNI D'UN DISPOSITIF À TRANSDUCTEURS POUR ACTIONNER, CONTRÔLER ET SURVEILLER LES CONDITIONS DE TENSION ET/OU DE TRACTION

(30) Priority: 11.03.2024 IT 202400005431
(43) Date of publication of application: 17.09.2025
(73) Proprietor: Cannon Ergos S.P.A., 20121 Milan (IT)
(72) Inventor: VOLPATO, Marco, 20121 Milano (IT); CORTI, Maurizio, 20121 Milano (IT); SAVIOLO, Luca, 20121 Milano (IT); VALERETTO, Stefano, 20121 Milano (IT)
(74) Representative: Luppi Intellectual Property S.r.l.

(56) References cited:
- EP-A1- 4 193 838
- WO-A1-2008/094021
- CN-A- 105 438 715
- CN-A- 115 570 827
- DE-U1- 29 905 210
- KR-A- 20030 087 452
- US-A1- 2010 270 131
- US-A1- 2017 081 129
- US-B2- 8 172 075

## Description

### Background of the invention

The invention relates to an apparatus and a method for the continuous production of a panel. In particular, a device is provided that is included in the apparatus and a related method for actuating, controlling and monitoring the tensioning and traction conditions of the apparatus.

Specifically, but not exclusively, the apparatus, which comprises two conveyor belts, is suitable for the continuous production of a multilayer panel having an intermediate foam layer (for example insulating foam) and outer coating layers, for example made of metal, plastics or paper.

### Prior art

Tensioning devices are known that are applied to a production apparatus having a pair of conveyor belts that are superimposed and configured to interact synergically with the outer surfaces of the multilayer panel to advance the panel being produced.

Known tensioning devices are configured to tension the belt of the respective conveyor so as to ensure correct advancement of the belt, and thus of the panel being produced.

In fact, during use the belt is subject to stress arising from the pressure exerted on each belt by the expanding foam and by the panel that is being dragged and by wear phenomena that affect the correct position and kinematics of the belt. Also mechanical settling phenomena, heating of the belt and/or of the support frame supporting the belt affect the shape and kinematics of the belt during dragging. In fact, the production apparatus operates inside a heated environment (like for example an oven) to allow and promote polymerization of the foam.

It is accordingly possible that the belt of the conveyor may generate belt component compression and misalignment phenomena downstream of the drive device, where the belt is pushed, and irregular traction and pulsing phenomena upstream of the mechanical drive system, or, in particular if the belt comprises a series of interconnected plates or tiles, it is possible that the space between the latter will not be equal in each section thereof during operation, causing misalignments, uneven movement or also lifting - along the longitudinal extent - varying locally the speed of the belt and compromising the uniform speed thereof.

In the case of dragging systems using pinions engaging the plates of the belt, periodic lengthening and shortening of the belt and thus cyclical speed variations may occur that are due to the polygonal effect arising from the rotation movement of each plate that engages the pinion. This polygonal effect is also present in the case of interconnecting plates that slide (for example by wheels) on the curved end parts of tracks.

One limit of the prior art apparatuses disclosed above is that the preload is often set manually by an operator with torque wrenches: this implies not only expenditure of time and money but also unsatisfactory levels of tensioning precision. Another limit of the prior art devices is the need to repeat and overhaul tensioning periodically. The poor precision and the decline in tensioning over time can cause damage both to the production apparatus and to the panel to be produced. In fact, if the tensioning preload is too light zones of accumulation of the interconnected plates and wave tensioning zones of the belt occur with adverse repercussions on the quality of the product. On the other hand, if the preload is excessive, the process of wear to the various components of the conveyor belt and of the surfaces on which the belt runs is accelerated.

Further, in particular as the plates of the belts are connected together by connecting joints on each side and are provided with sliding means fixed to the two sides, different tensioning values between the two opposite longitudinal sides of the belt cause movements of different amounts between the longitudinal opposite sides of the belt, causing a misalignment with transverse movement components (yaw) with respect to the advancement direction of the panel; this causes on the one hand manufacturing faults in the panel (which does not advance in the desired direction) and on the other hand untimely wear to support members (for example the bearings) of the belt.

Another limit of prior-art tensioning devices is not ensuring uniform tensioning of all sections of the belt.

A further limit of prior art tensioning devices is in particular in the case of an apparatus comprising a pair of conveyor belts, each served by a respective drive member, which the drive members are unable to maintain the same speed (i.e. are unable to synchronize the movement of the two belts) because the dragging force acting on each belt can vary because of the very uneven tightening values; so that that correct conveying of the panel is not ensured, without which the panel gets deformed, for example bends, because of the different advancement speeds of the two belts

KR 2003 0087452A discloses an apparatus according to the preamble of claim 1 and a method according to the preamble of claim 14.

In the light of what has been set out above, there is thus ample room for improvement for current tensioning devices for an apparatus that is suitable for producing a panel. In particular, it would be desirable to dispose of an apparatus that includes a device, and related method that ensure continuous and immediate correct tensioning of the belt during operation and which enables a panel to be obtained that is free of faults, in particular free of thickness, misalignment and bending faults.

### Objects of the invention

One object of the invention is to improve current tensioning devices and methods for an apparatus that is suitable for continuous production of a panel.

A further object of the invention is to provide an apparatus provided with a tensioning device that is an alternative to those of the prior art.

Another object is to provide a solution that is able to accelerate and ensure correct tensioning of the belt even during operation, avoiding the deterioration of tensioning during prolonged operation, machine downtime and maintenance costs.

Another object is to provide a solution that is able to ensure the continuous production of a panel that has high quality standards, in particular of a product that is free of bending faults.

Another object is to provide a solution that is able to increase product repeatability and quality.

### Summary of the invention

Such objects and still others are achieved by an apparatus and a method as defined in the attached claims.

Owing to the drive and thrust unit provided in the production apparatus, it is possible to apply longitudinal tensioning force to the conveyor belt that is adjustable and presettable parallel to the advancement direction of the panel being manufactured.

In particular, for each conveyor belt, a pair of curved guide and return portions is provided that is movable with respect to a corresponding support frame. Owing to the curved guide portions that are thus configured, it is possible to ensure uniform tensioning for each conveyor belt.

Owing to the device included in the apparatus, also including displacementtransducer-means, force transducer-means and thermal dilation transducer-means according to the invention, it is possible to actuate, control and monitor continuously both the state of tensioning of the conveyor belt and the state of traction of the conveying belt.

Other features and advantages will clearly emerge in the following description.

### Short description of the drawings

The invention can be better understood and implemented with reference to the attached drawings, which illustrate embodiments by way of non-limiting example, in which:
Figure 1 is a raised side view of an apparatus for producing a panel with two superimposed conveyor belts between which the panel can advance, to which a device according to a first embodiment is applied;
Figure 2 is a partial perspective view of a support structure of a conveyor belt to which the device according to the first embodiment is applied;
Figure 2A is a partial perspective view of a conveyor belt to which the device according to the second embodiment is applied;
Figure 2B is an enlarged detail of the view of Figure 2A that shows parts of the conveyor belt;
Figure 3 is a side view of the device according to the first embodiment;
Figure 4 is a perspective view of the apparatus of Figure 1 that shows how a respective device according to the first embodiment is applied to each of the two conveyor belts;
Figure 5 is a top view of opposite end portions of the upper frame in a zone in which traction means is positioned, some components are removed to better show the screw traction means for the conveyor belt;
Figure 6 is a top view section of the apparatus of Figure 2 passing through a median plane of the end of the upper frame to show the device according to the first embodiment;
Figure 6A is a section like that of Figure 6 of the device according to a variant on the first embodiment;
Figure 7 is a side view of a device according to a second embodiment;
Figure 7A is a raised side view of an apparatus for the production of a panel, to which a device according to a third embodiment is applied;
Figure 8 is a side view of a device according to a first variant on the third embodiment in which a force transducer means transmits force to two load cells;
Figure 9 is a side view of a second variant on the third embodiment in a second variant in which a force transducer means transmits force to a single load cell;
Figure 10 is a side view of a device according to a fourth embodiment;
Figure 11 is a section along a longitudinal plane of screw traction means;
Figure 12 is a schematic side view of a production apparatus in which there are force transducer means and displacement transducer means;
Figure 13 is a schematic side view of a production apparatus in which there are force transducer means and displacement transducer means, speed detecting means and temperature detecting means;

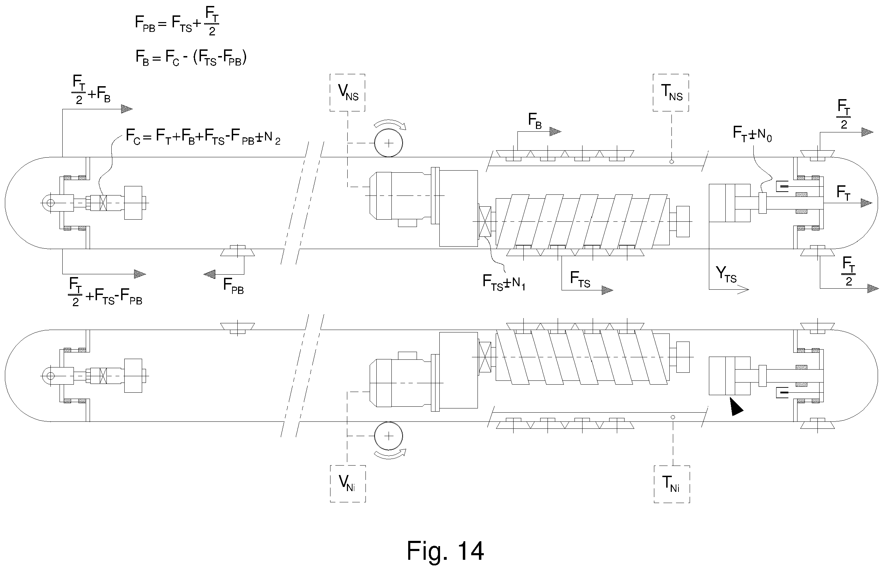

Figure 14 is a schematic side view of a production apparatus in which parameters associated with various components of the apparatus are indicated;
Figure 15 is a perspective view of a fixed portal support structure;
Figure 16 is an enlarged detail of a foot of the portal structure of Figure 15;
Figure 17 is a perspective view of a longitudinally free portal structure;
Figure 18 is an enlarged detail of a foot of the portal structure of Figure 17;
Figure 19 is a perspective view of a free portal structure with dilation transducer means;
Figure 20 is an enlarged detail of a foot of the portal structure of Figure 19.

### Detailed description

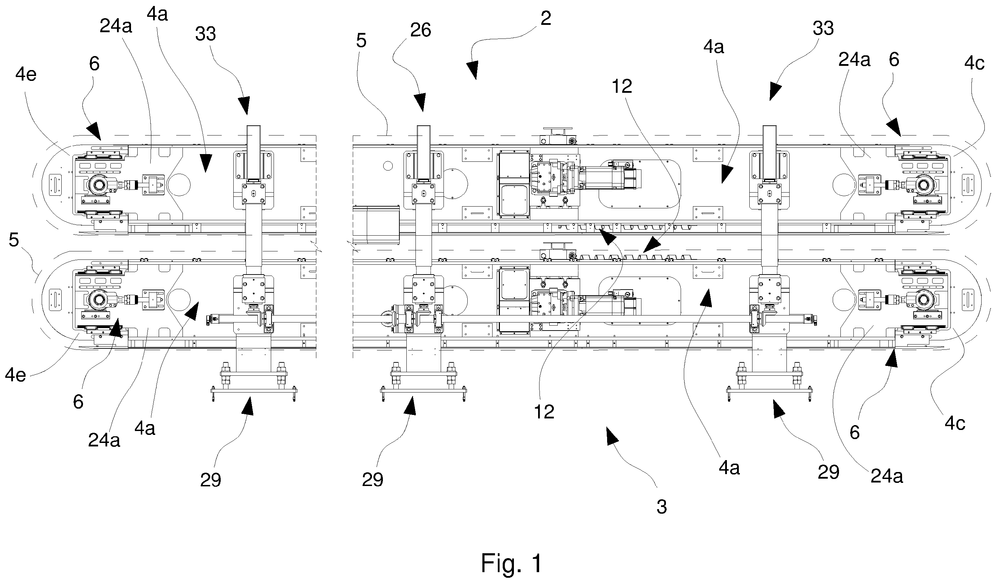

With reference to the figures mentioned above, 1 indicates an apparatus for the continuous production of a panel (Figure 1).

The apparatus 1 includes a pair of (upper and lower) support structures 4 each supporting an (upper and lower) conveyor belt 5 for conveying the movable closed loop type (schematically indicated by a dashed line in Figure 1) that will be disclosed below.

The apparatus 1 comprises, in particular, an upper conveying unit 2 and a lower conveying unit 3 positioned at a lower height than the height of the upper conveying unit 2. Each of the conveying units 2, 3 is associated with a respective conveyor belt 5. In use, between the two superimposed conveyor belts 5, i.e. the upper conveyor belt 5 and the lower conveyor belt 5, (and suitably spaced apart conveyor belts) the transit (and the formation) of the conveyed panel is permitted.

The apparatus 1 can be used in the production of a multilayer panel, in particular for a multilayer panel (also known as a "sandwich panel") having an intermediate foam layer (for example insulating foam) and outer coating and cover layers that form the outer surfaces of the panel (also called "covers" below).

The two conveyor belts 5 can be spaced apart so as to bound the containing and dragging section, also called the conveying zone below. During conveying, the foam expands, fills and solidifies inside the two outer coating surfaces of the panel forming the thickness of the cross section of the panel.

The outer coating layers can be made of sheet metal, metal foil, plastics or paper. The outer coating layers can be formed in the production apparatus from respective coils that are unwound in strips, or belts and are each fed to the respective conveyor belt 5, as will be disclosed below.

Each conveyor belt 5 is suitable for contacting (by containing or dragging) a respective surface of the outer coating layer of the panel to drag the respective surface of the outer coating layer of the panel along an advancement direction X. In particular, for forming foam panels for thermal or acoustic insulation, the foam being contained in stiff or flexible outer coating layers, the foam forms and expands inside these layers in the entry zone into the two facing conveyor belts 5. In particular, the conveyor belts 5 (of the respective conveying units 2, 3) have mutually facing surfaces arranged for contacting, and in use dragging and containing, the panel along the advancement direction X (for a path length along the advancement direction X sufficient to contain and convey the panel as far as solidification of the foam). The advancement direction X, in particular in a containing and dragging section on which the surfaces of conveyor belts 5 face one another, is substantially parallel to the facing surfaces of the conveyor belts 5.

The pair of support structures 4 can be supported by a series of portal structures 26, 33 (Figure 1 and Figures 15-20) that connect and support the two support structures 4 and can be fixed by foundations 29 to the ground or to a floor. Each of the portal structures can be adjustable so as to vary a distance between the upper and lower conveying units 2, 3 (or equivalently a distance between the two conveyor belts 5), in particular by raising or lowering the upper conveying unit 2 and the respective upper conveyor belt 5, thus varying the thickness of the panel being manufactured.

In use, a cover that forms the outer lower coating layer of the panel sandwich is unwound in the form of a strip or belt from a respective coil continuously and placed resting on the upper surfaces of the lower conveyor belt 5 that drags the sandwich panel along the aforesaid advancement direction X.

At the same time, in an identical manner, the further cover that forms the upper outer coating layer of the panel sandwich is unwound in the form of a further strip (or belt) from a further respectively coil continuously and placed, in particular in a state of tension, resting on the lower surface of the upper conveyor belt 5 that makes it advance along the advancement direction X.

Between the two upper and lower conveyor belts 5, in the conveying zone, in particular at the start of the advancement path of the panel (with respect to the advancement direction X), dispensing means can be provided for dispensing the reactive mixture for dispensing the mixture of reagent resins or reactive mixture. A table body (not shown) can be provided in the conveying zone on which the lower cover can slide that protrudes at the same height, to the inlet zone of the lower 3 conveyor belt 5. The dispensing means for dispensing the reactive mixture is configured, in particular, to pour and distribute a layer of polyurethane or phenol resin mixture on the further strip of sandwich cover dragged by the lower conveyor belt 5.

The mixture of reagent resins, intended to expand and polymerize by forming the foam that makes up the intermediate layer of the panel sandwich to be produced, can have a liquid or creamy consistency and, following a chemical reaction, can expand freely developing polyurethane or phenol foam. By expanding, the foam comes progressively into contact with and adheres to the strip or belt that forms the upper outer coating layer (cover) of the panel sandwich, which strip is dragged and fed according to the advancement direction X from the upper conveyor belt 5 that is movable parallel to the underlying further strip and also supports the thrust of the expanding foam; this upper cover is dragged parallel to the underlying further strip that forms the lower cover.

A single continuous panel is then obtained progressively that is conveyed according to the advancement direction X and the plate form of which is maintained, during expansion of the foam and consolidation thereof by polymerization, by the two conveyor belt 5 units that convey and contain the panel during expansion and polymerization of the fed foam.

Each of the (upper and lower) support structures 4 comprises, for the respective conveyor belt 5, a frame 4a, 4b (supported by the portal structures), a first curved guide and return portion 4c and a second curved guide and return portion 4d (Figures 1, 2, 3, 5 and 5). The frame 4a, 4b is not able to move longitudinally (apart from dilation caused by thermal variations). As mentioned, the frame 4a, 4b (together with the curved guide portions) in particular of the upper conveyor belt 5 (of the upper conveying unit 2) can move vertically to vary the distance from the lower conveyor belt 5 (of the lower conveying unit 3).

The conveyor belts 5 run along respective guide rails 14a, 14b (that will be disclosed below) and counteract the pressure of the foam and maintain in the correct position the strips, or belts, intended to form the outer coating layers of the panel.

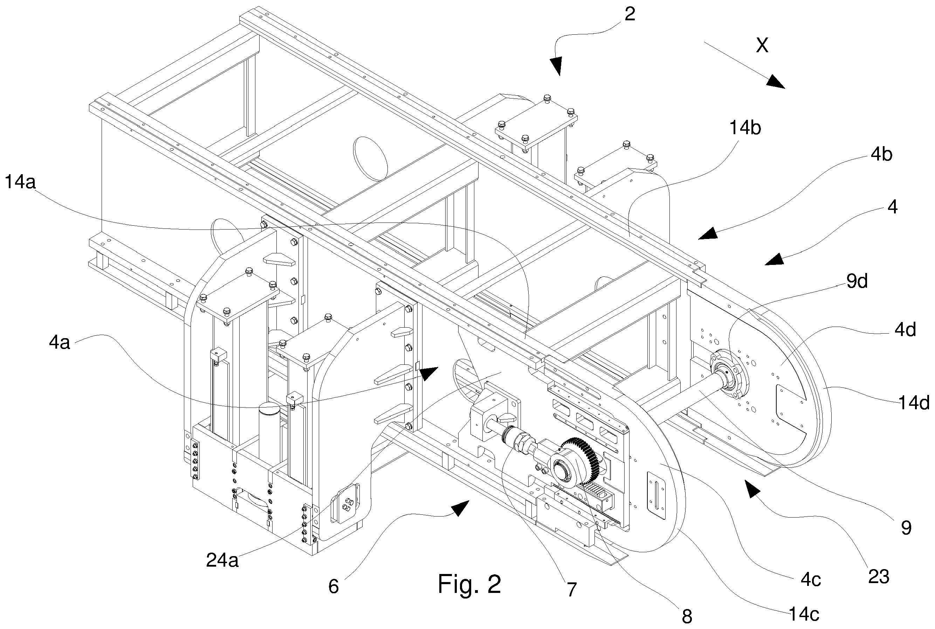

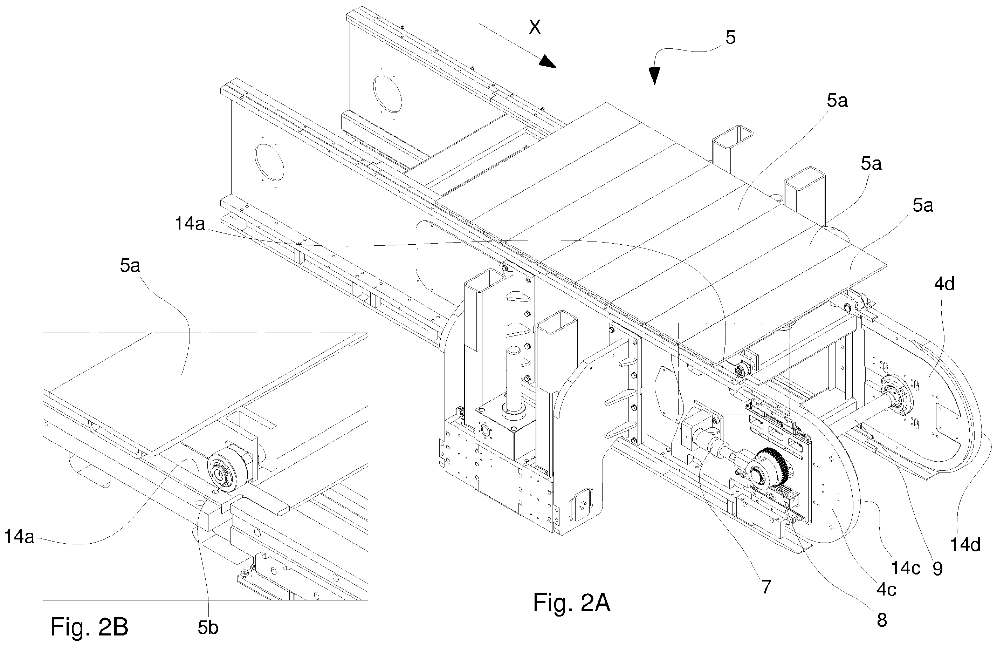

The upper and lower conveyor belts 5 can each comprise a series of conveying plates 5a that are flat or slide or tile-shaped, interconnected by articulated joints and linked together in a longitudinal direction (Figures 2A and 2B). Such conveying plates 5a can each be provided with wheels 5b, in particular with support bearings, shaped to permit sliding thereof around the respective support structures 4 (i.e. on the respective guide rails 14a, 14b and on the curved guide and return portions). The conveying plates 5a can be the same as one another or be paired in equal pairs.

If the panel to be made comprises two outer coating layers of deep-moulded sheet metal, the single conveying plates 5a can be provided with (for example removable) ridges to couple with respective longitudinal shaping ribs obtained in the sheet metal.

The conveying plates of the conveyor belts 5 comprise laterally the sliding wheels 5b or pins arranged for engaging guide surfaces obtained on, or applied to, the support structure 4 so that the conveying plates 5a remain resting, when they slide on the upper portion of the frame 4a, 4b, and remain hanging, when they slide on the lower portion of the frame 4a, 4b or in the curved guide and return portions 4c, 4d of each conveyor belt 5.

In a further embodiment of the apparatus, the conveyor belt can comprise a closed loop continuous flexible element.

The first curved guide portion 4c and the second curved guide portion 4d are movable longitudinally (with respect to the frame 4a, 4b) and are positioned at one end of the frame 4a, 4b. The first curved guide portion 4c and the second curved guide portion 4d act as a return for the respective conveyor belt 5 (by returning the sliding direction of the conveyor belt 5).

The first curved guide portion 4c and the second curved guide portion 4d form a curved outlet head for the panel. The curved outlet head can be provided with a device for actuating, controlling and monitoring the state of tensioning and/or traction of the apparatus 1, as will be disclosed below.

The first curved guide portion 4c and the second curved guide portion 4d are configured, in particular, to guide and return the opposite ends of the respective conveyor belt 5. The frame 4a, 4b can comprise, on opposite longitudinal sides, a first support side 4a and a second support side 4a (each provided with guides or guide rails 14a, 14b with which the sliding wheels 5b of the components of each conveyor belt 5 couple, as will be disclosed below).

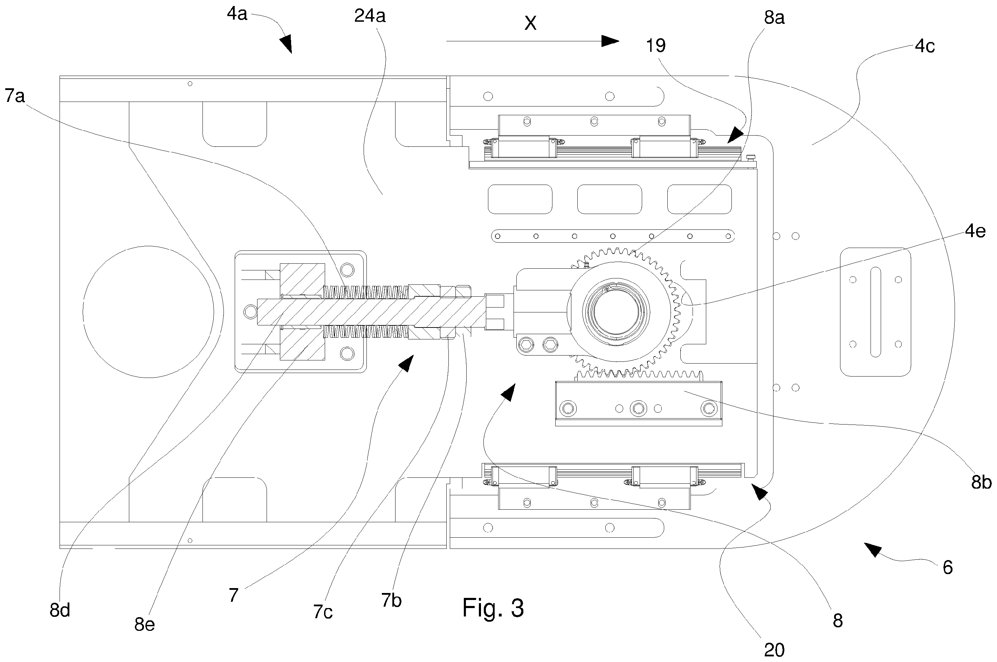

The first support side 4a and the second support side 4a can be coupled with and slidingly support, the first curved guide portion 4c and the second curved guide portion 4d respectively, parallel to the advancement direction X by one or more slider members 19, 20 (Figures 3, 7, 8 and 10).

The first side 4a and the second side 4b are arranged alongside along a direction that is transverse, in particular orthogonal, to the advancement direction X and are connected by transverse crosspieces.

Each of the sides 4a, 4b, can comprise in an end position (with respect to the advancement direction X) at least one support portion 24a, 24b.

In the illustrated embodiments, the support portions 24a, 24b are plate-shaped and are coupled with the thrust drive unit 7, 7', 7", 7"'. The plate-shaped support portions 24a, 24b are arranged substantially vertically.

In Figures 3, 7, 8 and 10 a first pair of slider members 19, 20 is illustrated configured for slidingly coupling the first side 4a with the first curved guide portion 4c.

In the illustrated embodiments, there is a further pair of slider members (which is not illustrated), positioned symmetrically with respect to a longitudinal axis of the conveyor belt 5, configured for coupling the second side 4b slidingly with the second curved guide portion 4d.

In one embodiment that is not illustrated a single slider member can be provided (oriented according to the advancement direction X) for each side.

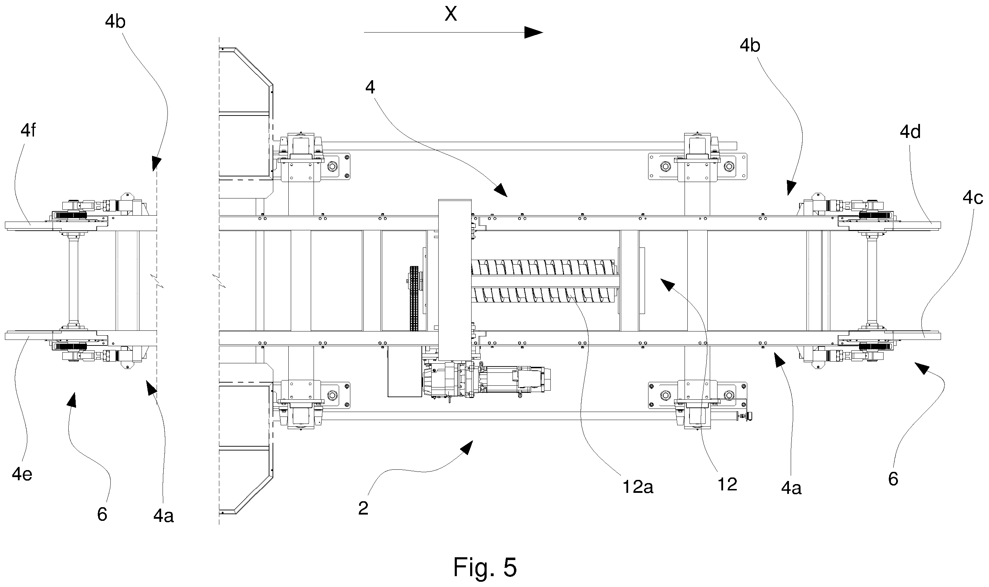

A third guide portion 4e and a fourth guide portion 4f can be provided (Figure 5) at an end opposite the support structure 4 opposite the first curved guide portion 4c and the second curved guide portion 4d respectively. Also the third curved guide portion 4e and the fourth curved guide portion 4f are arranged for guiding and returning the opposite ends of the respective conveyor belt 5.

The third guide portion 4e and a fourth guide portion 4f form a curved inlet head for the belts that form the panel. In the illustrated embodiment (Figures 1 and 5), on the curved inlet head (first curved guide portion 4c and on the second curved guide portion 4d) there is the device 6 for actuating, controlling and monitoring the state of tensioning and traction of each conveyor belt 5. In one embodiment that is not illustrated, the device for actuating, controlling and monitoring the state of tensioning and traction of each conveyor belt 5 can be provided only on the curved outlet head (third guide portion 4e and a fourth guide portion 4f).

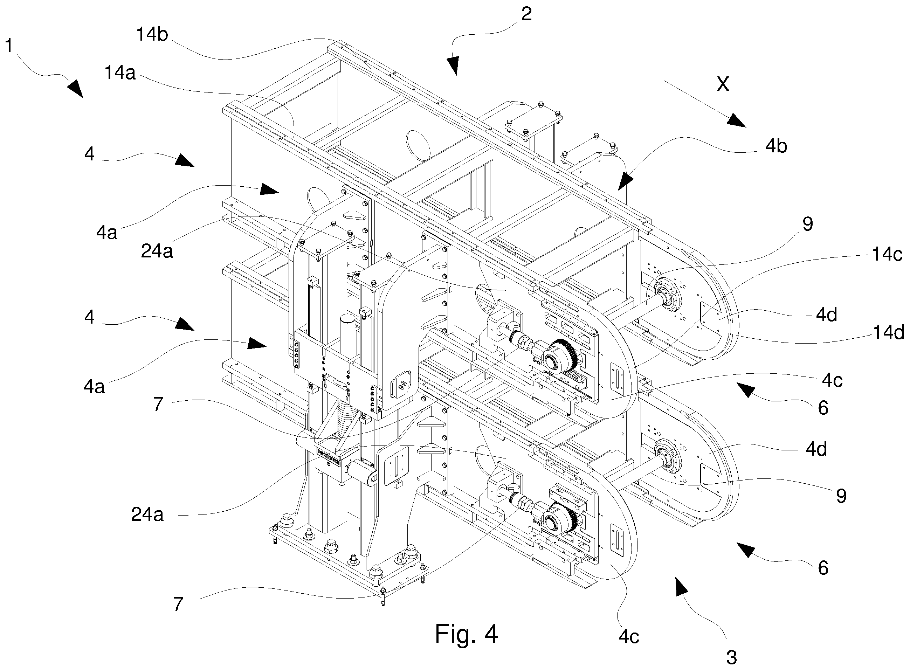

In the illustrated embodiment, the first and the second support side 4a, 4b comprise parallel rectilinear guide rails 14a, 14b (Figure 4) (along the advancement direction X) that go to define a resting plane for the conveying plates (or tiles) forming the conveyor belt 5 for conveying the panel. In this illustrated embodiment, the first and second curved guide portion 4c, 4d (and the third curved guide portion 4e and the fourth curved guide portion 4f) comprise parallel curved return guide rails 14c, 14d (Figure 4), arranged at the ends of the parallel rectilinear guide rails, and shaped to return the conveyor belt 5.

In the illustrated embodiment of the apparatus 1, the first curved guide portion 4c and the second curved guide portion 4d (and the third curved guide portion 4e and the fourth curved guide portion 4f) have a semicircular shape.

In one embodiment that is not illustrated of the apparatus, the curved guide portions 4c, 4d are formed by a cog with shaped teeth for engaging profiles of each plate so as to drag the plates of the rotating conveyor belt 5.

References 6, 6', 6", 6"' indicate different embodiments of a device for actuating, controlling and monitoring the state of tensioning and traction of the apparatus 1 for the continuous production of a panel; these embodiments and the main differences between the embodiments will be disclosed below.

The apparatus 1 can comprise a pair of devices 6, 6', 6", 6"' each of which can be arranged for tensioning a respective conveyor belt 5.

The device 6, 6', 6", 6" can be provided for each of the aforesaid support structures 4 and comprises a thrust drive unit 7, 7', 7", 7‴ configured, in particular, to apply an adjustable and a controlled presettable longitudinal tensioning force F_{T} (to each conveyor belt 5) controlled parallel to the advancement direction X and move the first curved guide portion 4c and the second curved guide portion 4d with respect to the frame 4a, 4b.

The drive and thrust unit 7, 7', 7", 7‴ is connected to an end of the respective end of the frame 4a, 4b and to a transmission assembly 23 to transmit a movement of the first curved guide portion 4c to the second curved guide portion 4d so as to ensure the same movement of the first curved guide portion 4c to the second curved guide portion 4d.

The transmission assembly 23 comprises, in particular, a connection unit 8; 8" and a coupling and transmission unit 9 that will be disclosed below in greater detail. Further, the transmission assembly 23 comprises, in particular, a further connection unit 10 which is also disclosed below in greater detail.

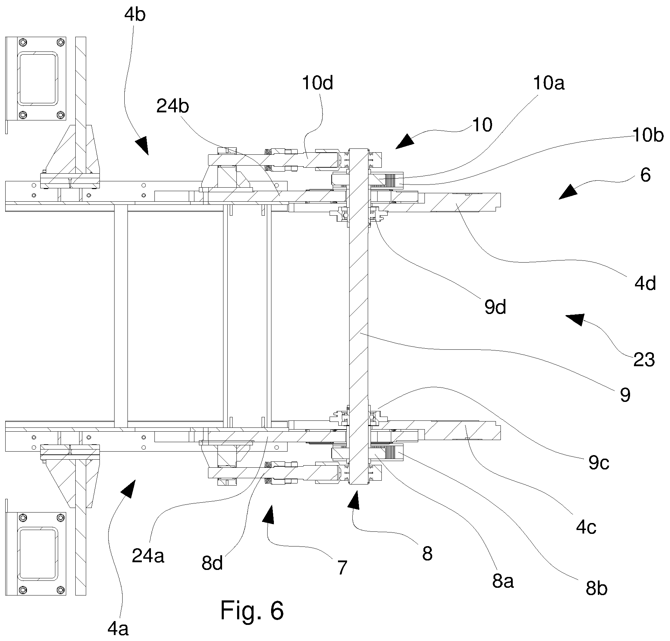

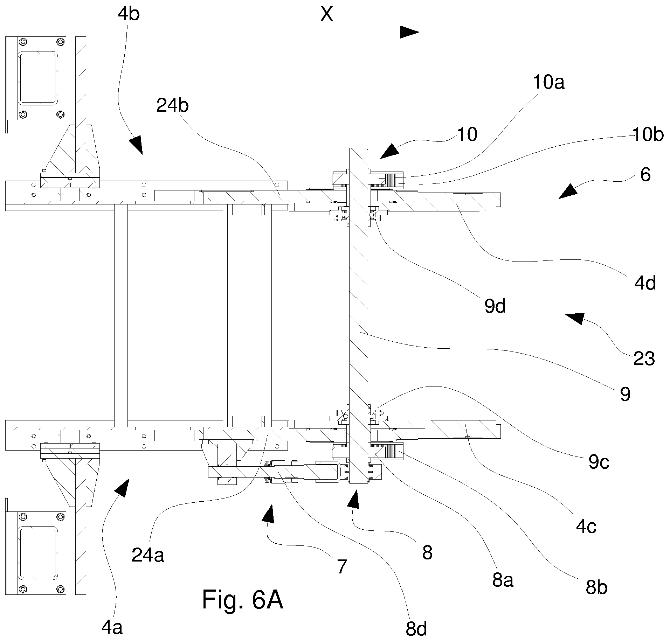

The connection unit 8, 8" coupled with, and movable with, the respective first curved guide portion 4c. Each connection unit 8, 8" comprises, in particular, a support arm 8d, 8d" carrying a gear element 8a, 8a', 8a", 8a"' (Figures 3, 7, 8 and 10) configured, in particular, to engage a respective rack element 8b, 8b', 8b", 8b‴ fixed to the corresponding frame 4a, 4b. The support arm 8d, 8d" can be coupled slidingly with a linear guide element 8e, 8e', 8e" (Figures 3, 7, 8 and 9) fixed to either the first side 4a or the second side 4b to move (in a guided manner) parallel to the advancement direction X and transmit the longitudinal tensioning force F_{T} to the conveyor belt 5. In the illustrated embodiments of the tensioning device in the figures, the linear guide element 8e, 8e', 8e" is fixed to the first side 4a of the frame 4a, 4b. The connection unit 8, 8" further comprises a bearings element 9c (Figure 6) for rotatingly supporting a shaft 9, which will be disclosed below. In the illustrated embodiments of the tensioning device, the support arm 8d, 8d" extends substantially parallel to the advancement direction X.

Each connection unit 8, 8" is connected, in particular by bearing supports 9c, 9d, to a coupling and transmission unit 9 (Figures 2 and 6) configured, in particular, to transmit (by the rotation of the gear elements 8a, 8a', 8a", 8a"' and of a further gear element 10a as disclosed below) the movement of the connection unit 8, 8" and the longitudinal force applied to the respective second curved guide portion 4d such that a movement of the first curved guide portion 4c is matched by the same movement of the respective second curved guide portion 4d.

The further connection unit 10 is coupled with, and movable with, the second curved guide and return portion 4d. The further connection unit 10 is connected to the respective connection unit 8, 8" through the respective coupling and transmission unit 9. Also the further connection unit 10 comprises, in particular, a further gear element 10a configured to engage a further rack element 10b fixed to the frame 4a, 4b.

In the embodiments of the device 6 illustrated in Figures 5 and 6, the further connection unit 10 provided between the first side 4a and the first movable curved guide portion 4c has a configuration that mirrors the connection unit 8 provided between the second side 4b and second curved guide portion 4d. In particular, in these embodiments the further connection unit 10 has a further support arm 10d.

In one variant on the first embodiment of the device 6 illustrated in Figure 6A, a sole support arm is provided between the first side 4a and the first curved guide portion 4c, namely the support arm 8d.

The coupling and transmission unit comprises a transmission shaft 9 that is rotatable around a rotation axis that is transverse to the advancement direction X and at the opposite ends of which both the gear element 8a, 8a', 8a", 8a"' and the further gear element 10a are fitted (that couple respectively with the further rack element 10b fixed integrally to the side 4b) respectively. The gear element 8a, 8a', 8a", 8a"' and the further gear element 10a rotate as one with the transmission shaft 9.

The transmission shaft 9 is fitted to (and constrained on) in a rotatably free manner on the first curved guide portion 4c and to the second curved guide portion 4d respectively - by respective support bearings 9c, 8d (Figure 6) - so that a rototranslational movement of the gear element 8a, 8a', 8a", 8a"' is matched by the same rototranslational movement of the further gear element 10a so as to distribute equally the adjustable and presettable longitudinal tensioning force applied by the drive and thrust unit 7, 7', 7", 7"' on both the first curved guide portion 4c and the second curved guide portion 4d.

The drive and thrust unit 7, 7', 7", 7‴ comprises, in particular, at least one projectable unit 7a, 7a', 7b', 7a", 7b", 7a"' configured, in particular, to exert - parallel to the advancement direction X - the longitudinal tensioning force on the connection unit 8, 8" to tension the conveyor belt 5.

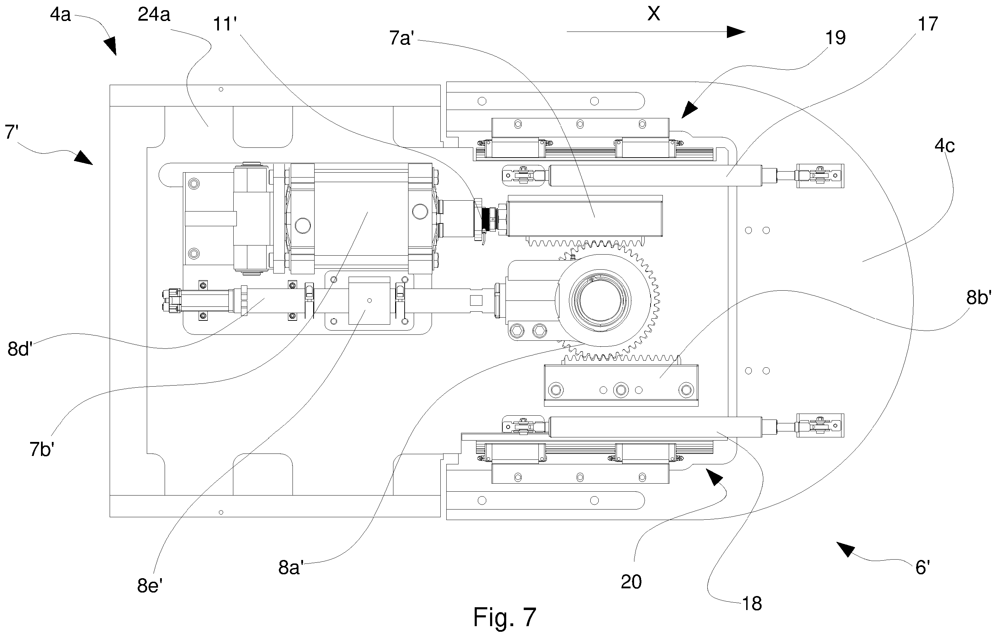

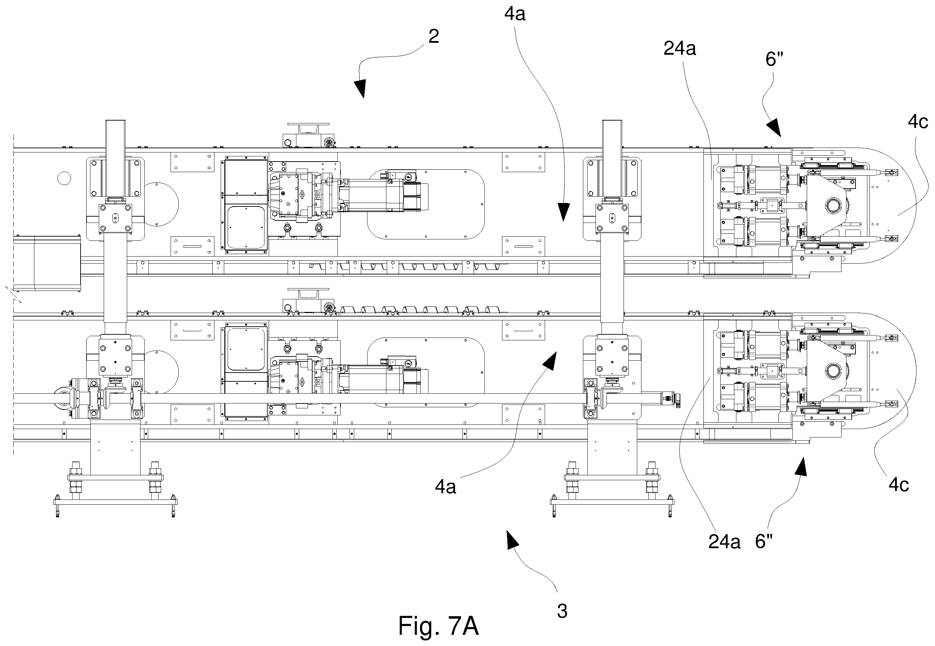

In the second and third embodiment of the tensioning device 6', 6" (Figures 7, 7A 8 and 9), the projectable unit comprises, in particular, at least one pneumatic actuator 7b', 7a", 7b" configured, in particular, to exert a presettable tensioning pneumatic force. The pneumatic force can be controlled by setting a pneumatic pressure.

In the second embodiment of the device indicated by reference 6' (Figure 7), there is a sole pneumatic actuator 7b'. In this second embodiment, the projectable unit 7' is provided at a movable end thereof (in this embodiment, the stem of the pneumatic actuator) of a movable rack portion 7a' and configured, in particular, to engage the gear element 8a'. The movable rack portion 7a' is arranged for acting on the gear element 8a' in a zone diametrically opposite the rack element 8b' (which is stationary) to duplicate the longitudinal tensioning force F_{T} exerted by the projectable unit 7'.

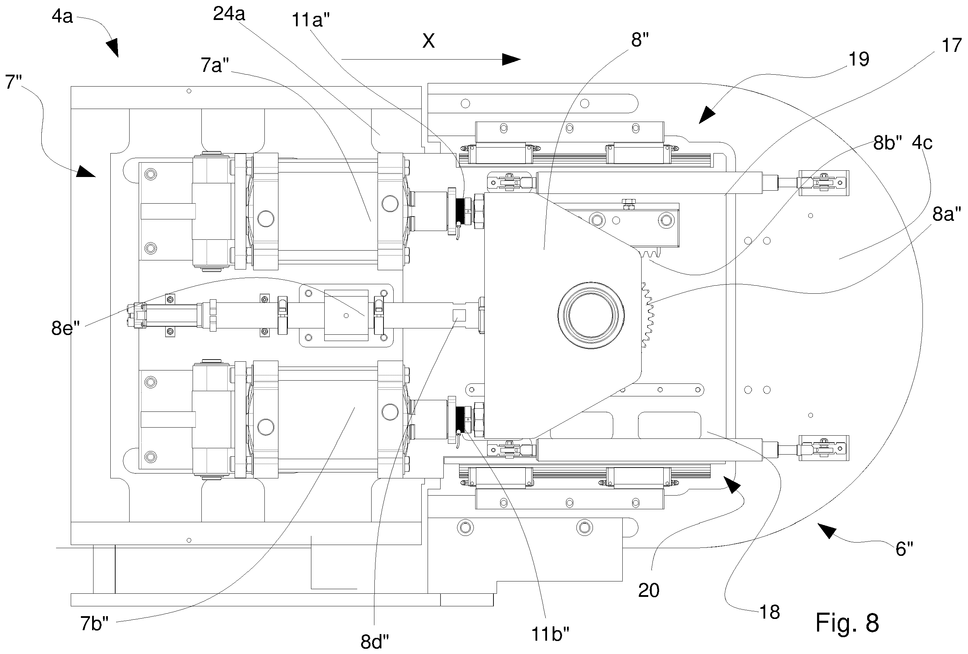

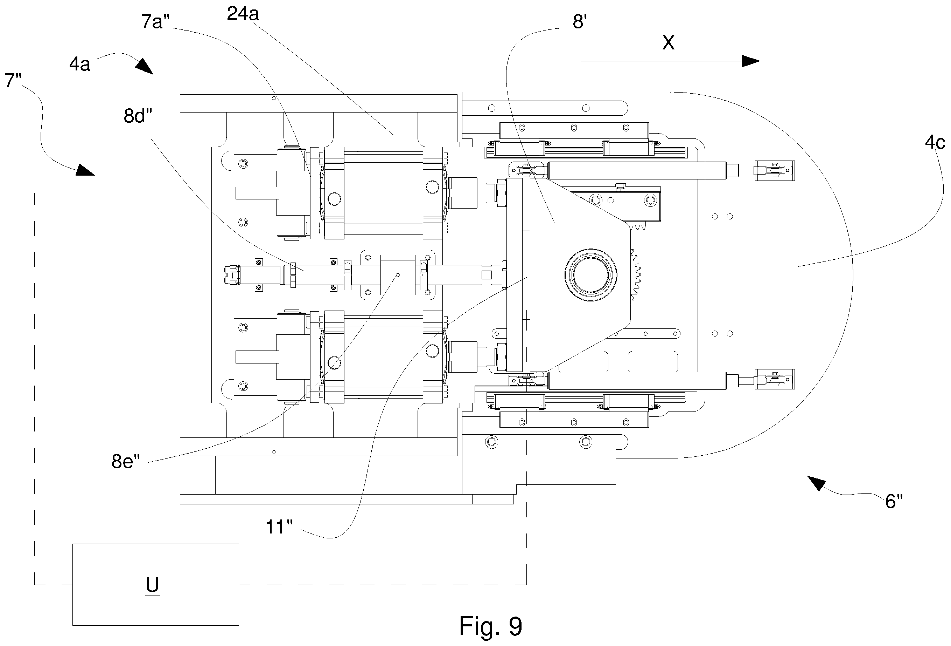

In the third embodiment of the device indicated by reference 6" (Figures 8 and 9) there is a pair of pneumatic actuators 7a", 7b". In this third embodiment, the connection unit 8, 8" comprises a plate-shaped body 8" to which the pair of pneumatic actuators 7a", 7b" is connected to transmit the longitudinal force to the gear element 8a". In this third embodiment the plate-shaped body 8" is connected to the corresponding stems of the pair of pneumatic actuators 7a", 7b" that are positioned alongside one another in a position that is symmetrical with respect to an axis of the support arm 8d".

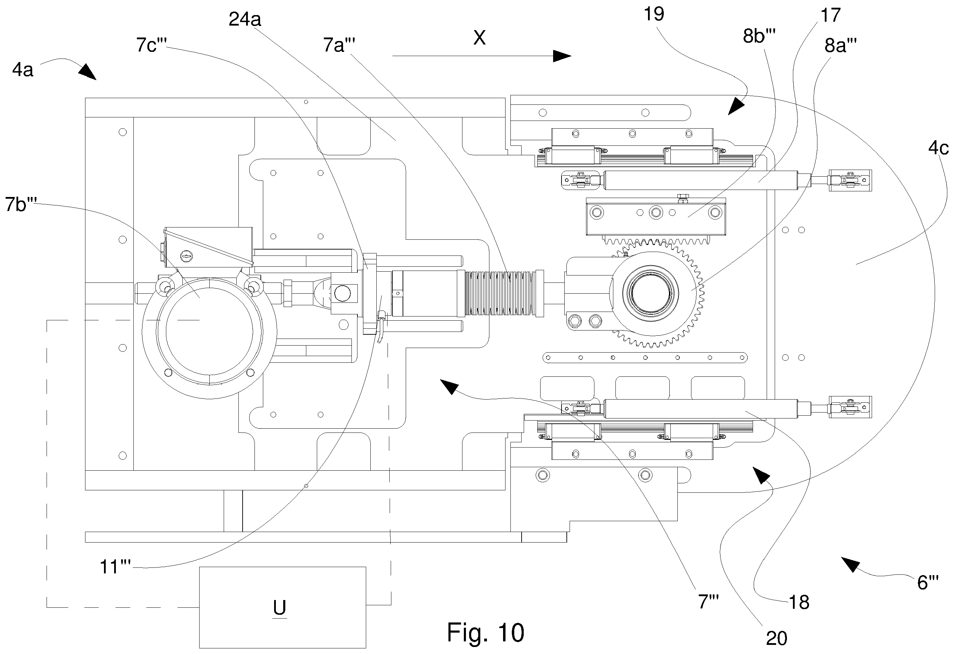

In the first embodiment of the device indicated by reference 6 (Figures 2 and 3) and in the fourth embodiment of the device indicated by reference 6"' (Figure 10), the projectable unit can comprise at least one elastic element 7a, 7a"', which is configured, in particular, to exert an elastic tensioning force. The elastic tensioning force can be controlled by a preload applied to the elastic element installed on the projectable unit. The elastic element 7a, 7a"' can comprise a coil spring or one or more disc springs (as in the illustrated embodiments).

In the first embodiment of the device 6 (Figures 2 and 3), the drive and thrust unit 7 comprises an adjusting nut 7c positioned at one end of the elastic element 7a that is operatable manually to compress or decompress the elastic element 7a by varying the preload deflection thereof - and thus the thrust exertible on the connection unit 8, 8" - and thus the longitudinal tensioning force F_{T} that is exertible on the conveyor belt 5.

In the fourth embodiment of the device 6"' (Figure 10), the drive and thrust unit 7"' comprises a tensioning adjusting device 7b‴ that is operationally couplable with the elastic element 7a". The tensioning adjusting device 7b‴ is configured, in particular, to permit a movement that is parallel to the advancement direction X of an extendible body 7c"' for supporting and guiding the elastic element 7a‴ to compress or decompress the elastic element 7a"' by varying the preload deflection - the thrust exertible on the connection unit 8, 8" and thus the longitudinal tensioning force F_{T} exertible on the conveyor belt 5. In the illustrated embodiment, the tensioning adjusting device 7b‴ can comprise and electric motor (or a reduction unit). In one embodiment that is not illustrated, the adjusting device can comprise a fluid dynamic actuator.

The device 6, 6', 6", 6‴ can further comprise one or more damping means 17, 18 (Figures 7, 8 and 9 and 10) positioned between the frame 4a, 4b and respectively the first curved guide and return portion 4c (and/or the second curved guide and return portion 4d) so as to enable, during the transit of the single conveying plates 5a of the conveyor belt 5 on the curved guide portions 4c and 4d, periodic variations of the deflection of elastic elements (like for example the elastic elements7a, 7a‴ or the pneumatic actuators 7a", 7b") with dampened movements so as to make the corresponding movement between the frame 4a, 4b and the curved guide portions 4c, 4d softer.

In the illustrated embodiment, two viscous dampers are provided as damping means 17, 18. In one embodiment that is not illustrated, it is possible to provide a sole damping member.

As the temperature associated with the promotion of the reaction of the polyurethane foam has to be greater than 50 °C (this temperature is usually set at about 70 °C), heating the support structures 4 of the two conveyor belts 5 causes them to dilate with respect to the foundations. In the illustrated embodiments, the foundations comprise foundation plates.

It should be noted that, for example, an apparatus 1 that is 40 metres long that is heated from 20 °C to 70 °C, that is mainly made of steel can dilate about 24 mm. On the other hand, the foundation plates, at the level of the floor, heat up more slowly with a much smaller temperature variation so that dilation thereof is almost negligible.

The portal structures 26, 33 that support the frame 4a, 4b of the lower conveyor belt 5 (associated with the lower conveying unit 3) and that support and can lift the frame 4a, 4b of the conveyor belt 5 (associated with the upper conveying unit 2), follow this dilation that is directed prevalently in the longitudinal direction X.

Each portal structure 26, 33 comprises, in particular, two columns provided with respective support feet 27, 34. In the illustrated embodiments, the support feet 27, 34 are plate-shaped, each comprising a plate welded to the lower end part of a respective column.

In order to enable the frames of the conveyor belts 5 to dilate without distortion and - as will be disclosed below - in order to detect the longitudinal dilation, just one portal structure, the fixed portal structure 26, can be constrained (in at least two horizontal directions that are orthogonal to one another) on the foundation plates 29 in a given section of the apparatus 1, whereas the other portal structure 33 (or the other portal structures 33, if the apparatus 1 has a relatively large longitudinal dimension) are free to slide (with respect to the foundations 29) parallel to the longitudinal direction X.

In the embodiment illustrated in Figure 1, the position of the fixed portal structure 26 is intermediate in relation to the longitudinal extent of the apparatus 1.

In the embodiment illustrated in Figure 1, for the apparatus 1 only three portal structures 26, 33 are shown, one of which is fixed (indicated by reference 26) and two are free to slide longitudinally (indicated by the references 33).

In one embodiment that is not illustrated, the fixed portal structure 26 can be positioned in an inlet zone of the panel.

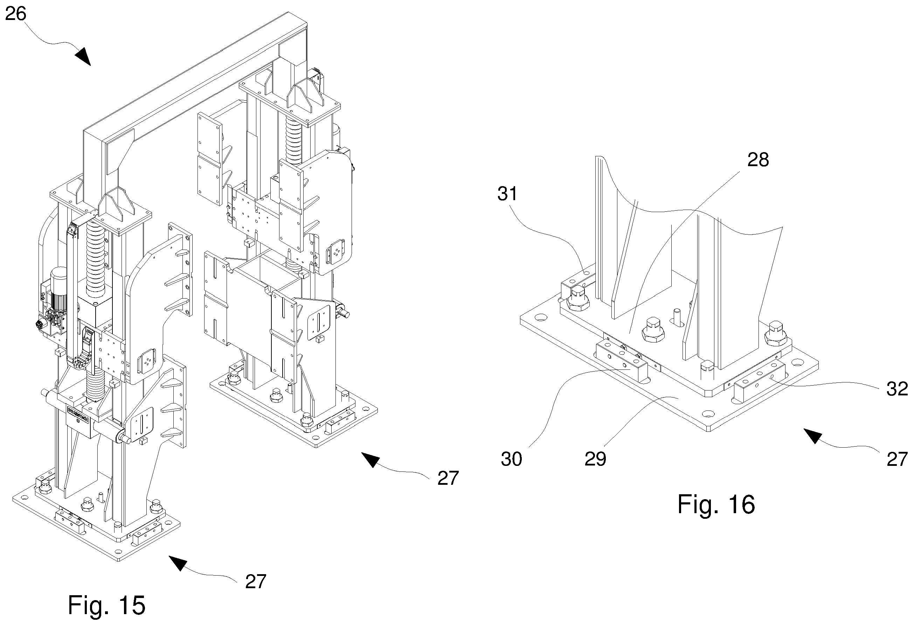

As mentioned, the fixed portal structure 26 can rest on two fixed support feet 27. In the embodiment illustrated in Figures 15 and 16, the support foot 27 comprises a rectangular plate-shaped body 28 integral with the corresponding column (or equivalently with the fixed support structure 26). For each column, a foundation or foundation plate 29 is provided on the floor arranged for supportingly receiving the support feet 27. From the foundation plate 29, at least three arresting units 30, 31 32 protrude that are arranged, in use, facing three edges of the plate-shaped body 28 so as to lock the movements of the fixed support foot 27 along three horizontal directions. Each arrest unit 30, 31, 32 is provided with adjustable arresting elements (in particular screws or bolts) for contacting the aforesaid edges. The two support feet 27 and the corresponding foundation plates 29 are configured in a specular manner on both the columns.

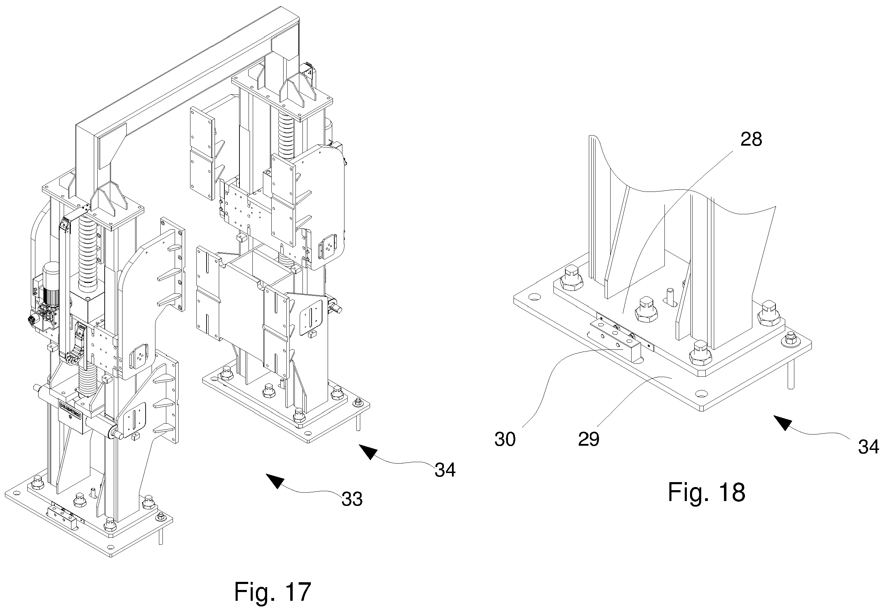

The free portal structure 33 can also rest on two longitudinally free support feet 34. In the embodiment illustrated in Figures 17 and 18, for each column, from the foundation plate 29 a sole arrest unit 30 protrudes, that is arranged, in use, facing an outer longitudinal edge of the plate-shaped body 28 so as to lock the movement of the support foot 34 along a horizontal direction that is transverse, in particular orthogonal, to the advancement direction X. Also in the free support structure 33, the two support feet 34 and the corresponding foundation plates 29 are configured in a specular manner on both the columns.

In other words, the free support feet 34 are provided with constraints that slide longitudinally that enable the support feet 34 to slide pushed by the dilation of the apparatus 1 with respect to the foundation plates 29.

The apparatus 1 comprises, in particular, dilation transducer means 35 configured to measure thermal dilation of the frame 4a, 4b (or of the pair of frames 4a, 4b) in the longitudinal direction X due to a temperature variation.

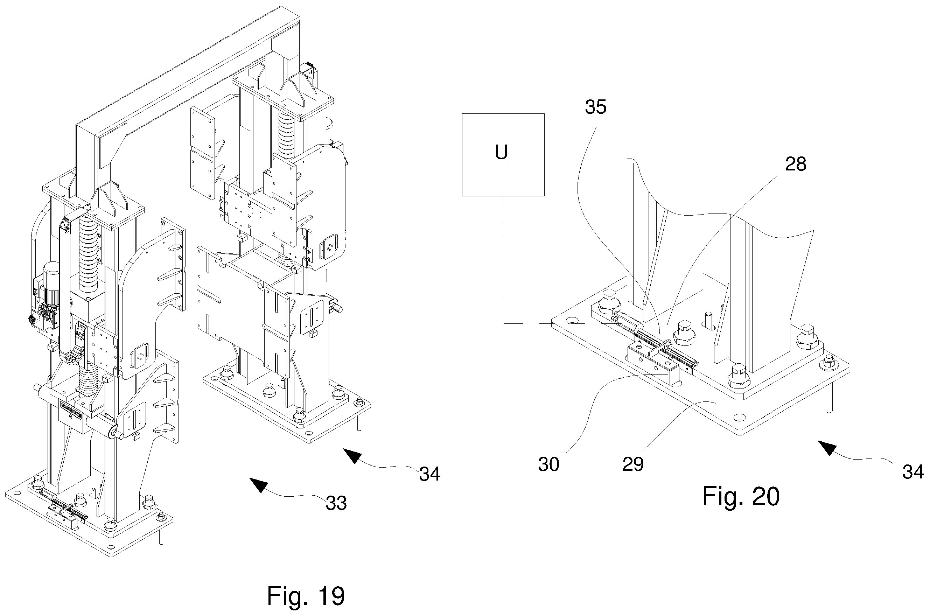

The dilation transducer means 35 is provided in the free portal structure 33, in particular at one or more free support feet 34. In the embodiment illustrated in Figures 19 and 20, the dilation transducer means 35 comprises at least one longitudinal movement transducer positioned on the support feet 34 to measure a longitudinal movement (along the longitudinal direction X) between the plate-shaped body 28 and the foundation plate 29. The dilation transducer means 35 is configured, in particular, to measure the dilation and send the dilation as a datum for acquiring (indirectly) the heating transitory of the apparatus 1. In this specific illustrated embodiment, the longitudinal movement transducer of the dilation transducer means 35 is connected at the arrest unit 30.

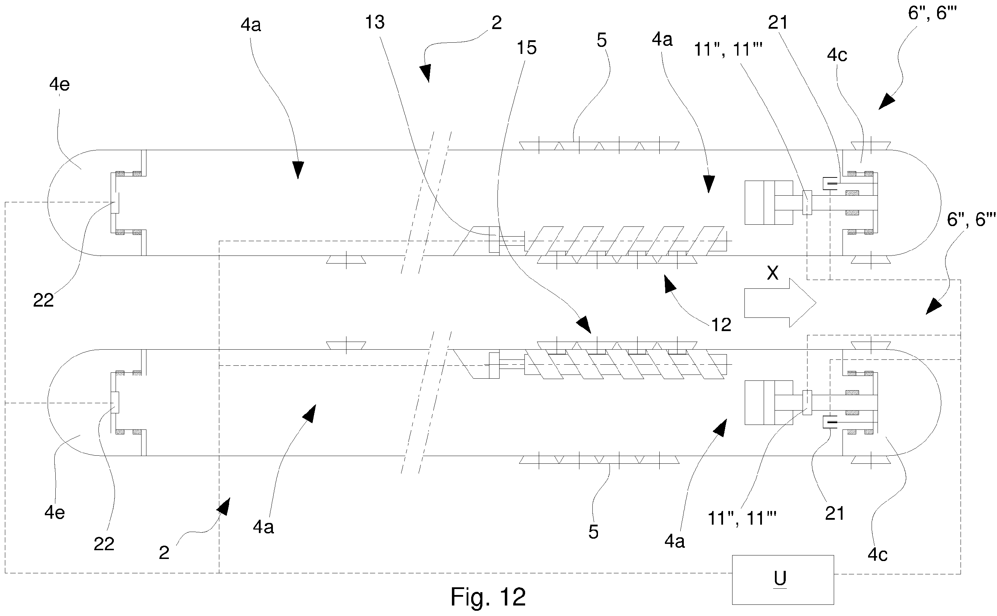

The device 6, 6', 6", 6‴ comprises, in particular, longitudinal displacement transducer means 21 (Figure 12) configured, in particular, to detect a movement - measured parallel to the advancement direction X - between the frame 4a, 4b and respectively the first curved guide portion 4c and the second curved guide portion 4d.

The longitudinal displacement transducer means 21 is positioned between the guide structure 4a, 4b and respectively the first curved guide portion 4c and the second curved guide portion 4d. In particular, the longitudinal displacement transducer means 21 can be applied to the drive and thrust unit 7, 7', 7", 7‴.

The longitudinal displacement transducer means 21 can comprise a movement sensor of resistive or optical type.

The device 6, 6', 6", 6‴ comprises, in particular, first force transducer means 11', 11", 11‴ (Figures 7, 8, 9, 10 and 12) configured, in particular, to detect a tensioning force F_{T} of the conveyor belt 5 measured parallel to the advancement direction X. The first force transducer means 11', 11", 11‴ is applied to the drive and thrust unit 7, 7', 7", 7‴. The first force transducer means 11', 11", 11"' can include one or more load cells.

In the second embodiment, the first force transducer means 11' is applied at the movable end (the stem of the pneumatic actuator) of the projectable unit 7' (Figure 7).

In a first variant on the third embodiment, the first force transducer means 11" provides a pair of force transducers 11a', 11b' (Figure 8) each of which is applied at the two movable ends (stems) of the pair of thrust actuators 7" (pneumatic cylinders).

In a second variant on the third embodiment, the first force transducer means 11" is applied (in a central position) between the device with two thrust actuators 7'' and the plate 8" (Figure 9).

In the fourth embodiment, the first force transducer means 11"' (Figure 10) is applied to the drive and thrust unit with a single actuator 7, 7', 7‴ at the arm element 8d that transfers the thrust to the gear element 8a"'.

The device 6', 6", 6‴ comprises, in particular, a control unit U (Figures 9, 10, 11, 12 and 20) configured, in particular, to receive signals coming from the first force transducer means 11', 11", 11‴ and control in an open loop or through feedback the drive and thrust unit 7', 7", 7‴ to preset, correct and maintain a preset tensioning force value F_{T}.

The apparatus 1 comprises, in particular, traction means 12, 15 (Figures 1, 11 and 12) provided for actuating the advancement of each conveyor belt 5.

In particular, in the embodiment of the apparatus 1 illustrated in the figures, upper traction means 12 can be provided for the upper conveyor belt 5, and lower traction means 15 for the lower conveyor belt 5.

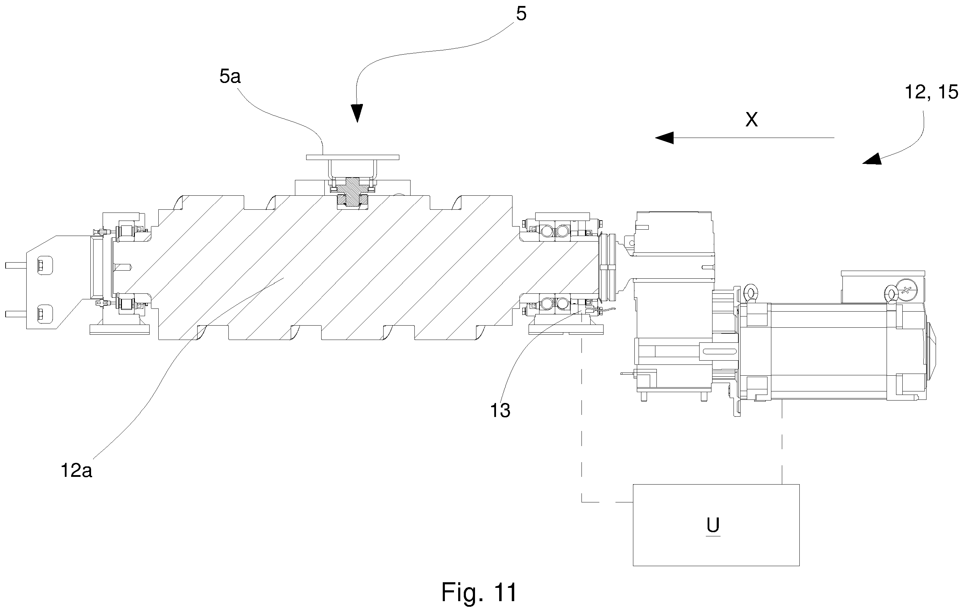

In this illustrated embodiment, the traction means 12, 15 each comprise a feed screw 12a (Figures 5 and 11) rotated by respective motor means, such as a respective reduction unit. This feed screw 12a can have a rectangular thread profile (taken on a median plane that passes through the axis of the screw). The traction means 12, 15 can be positioned inside the closed loop of the respective conveyor belts 5.

The rectangular profile of the feed screw 12a is shaped to engage a series of dragging pins provided with idling wheels or bearings, fixed to, and protruding from the conveying plates 5a (Figure 11). The dragging pins protrude towards the corresponding traction means 12, 15 near a transverse centre zone of each plate, thus enabling the greatest traction force to be distributed on several pins.

As mentioned, this feed screw 12a can be moved by a kinematic chain that connects the feed screw 12a to the reduction unit that can be placed inside the support structure of each conveyor belt 5 or outside, placed next to each conveyor belt (as in the illustrated embodiment). The reduction unit can be placed outside each conveyor belt 5 and motion can be transmitted by a multiple link chain or by toothed belts. Alternatively, motion can be transmitted by an articulated joint and a right-angle gear. In the illustrated embodiment, the traction means 12, 15 is fitted both to the upper conveyor belt 5 and to the lower conveyor belt 5 in a flat sliding zone arranged near one of the two end curved guide portions 4c, 4d and at the conveying zone in which the two conveyor belts 5 face one another. The traction means of the upper conveyor belt 5 and of the lower conveyor belt 5 are mechanically independent and the speed set for the corresponding feed screws can be synchronized by a control software of the respective electric motors of reduction gear. In this embodiment that is not illustrated, it is possible to distribute the traction forces between the upper conveyor belt 5 and the lower conveyor belt 5 measuring and controlling the torque transmitted by each electric motor. The greatest traction force can be imposed on the lower conveyor belt 5 in the conveying zone at the feed screw 12a.

In one embodiment that is not illustrated, as mentioned, the traction means can comprise a traction unit with end pinions. In this embodiment, two pinions are placed at the ends of the support structure and form two return curves of the conveyor belt; the two pinions are connected by a connecting shaft (so as to rotate together) and are moved by a further reduction unit driven by a further controlled-speed electric motor acting on one of the two pinions. The end pinions can be installed on both the upper conveyor belt and on the lower conveyor belt. The two traction units that serve the two end pinions are mechanically independent and the speed thereof can be synchronized by control software of the respective electric motors. In this embodiment that is not illustrated it is possible to distribute the traction forces between the upper conveyor belt 5 and the lower conveyor belt 5 by measuring controlling the torque transmitted by the further electric motor, the greatest traction force can be imposed on the lower conveyor belt 5.

As mentioned, the polyurethane resin is dispensed by the dispensing means that dispenses reactive mixture on the sheet metal or on the outer lower layer of the panel to be manufactured at the conveying zone, in particular in the inlet section to the double conveyor belt, and expands by chemical reaction to form a foam. By expanding between the two conveyor belts 5, the foam develops a pressure that is transmitted to the coating layer and then to the surfaces facing the conveyor belt 5. The weight of the conveying plates 5a of the conveyor belt and the thrust of the foam cause friction forces to be overcome to enable the wheels or bearings of each conveying plate 5a to run and determine the size of the greatest traction force that has to be imposed on each conveyor belt 5 to move each conveyor belt 5.

In addition or alternatively to the first force transducer means 11', 11", 11‴, the device 6, 6', 6", 6‴ can comprise second force transducer means 13 (Figure 11) that is configured, in particular, to detect a traction force F_{TS} acting on traction means 12, 15 of the apparatus 1 suitable for moving the respective conveyor belt 5. The second force transducer means 13 can include one or more load cells.

The control unit U can be further configured to receive further signals from the second force transducer means 13 and correlate the further signals with the preset tensioning force value F_{T}; this is in order to set, correct and maintain a preset value of the tensioning force F_{T}.

The speed of the conveyor belt 5 is set and is a parameter linked to the panel production process. The control unit U is configured, in particular, to differentiate the traction forces and, where necessary, to also differentiate the speed of the two conveyor belts 5 so as to prevent the panel getting bent upon leaving the double conveyor belt 5, in particular getting bent downwards because of the different amounts of the thrust arising from the cutting forces in a longitudinal direction that the foam exerts along the thickness of the panel.

In particular, the aforesaid control unit U can be operationally connected both to the first force transducer means 11', 11", 11"' and to the second force transducer means 13 to command and control in a correlated manner the traction means 12, 15 and synchronize the speeds of the two conveyor belts 5 with a possible speed difference and to command and control the respective devices 6, 6', 6", 6"' (applied to the lower and upper conveyor belt 5) so as to correlate the tensioning forces between the upper conveyor belt and the lower conveyor belt to prevent lack of tensioning from occurring that would cause misalignments of the conveying plates 5a and undesired distortions of the panel and to thus avoid undesired surface deformation of and/or curving effects on the panel being manufactured. In other words, it is possible to control the upper and lower conveyor belts 5 so as to have: reference speed values that are equal (or comprised in a differentiation range); a difference of the presettable greatest traction force suitable for preventing the occurrence at the outlet of the double conveyor belt of longitudinal curvature of the panel, caused by the difference of the thrust resulting from the expansion pressure of the foam and by the cutting forces that occur in a longitudinal direction, in particular in the case of panels that are more than 40 mm thick, between the foam in contact with and near the containing surface of the outer lower layer and the foam in contact with and near the containing surface of the outer upper layer; and a suitable tensioning force so as to prevent the different traction forces of the upper and lower conveyor belt being able to cause a misalignment of the conveying plates 5a of each conveyor belt 5 due to a lack of suitable tensioning and thus prevent undesired deformations of and/or curving effects on the panel being manufactured.

The control unit U, together with the provision of a pair of devices 6, 6', 6", 6" for the two conveyor belts 5, performs a control action that ensures that downstream of the traction means 12, 15 (with respect to the longitudinal direction X), each conveyor belt 5 is always tensioned. In fact, if because of dilation or settling or lack of tensioning one of the two conveyor belts 5 is pushed by the traction screw, silent compression would occur of adjacent conveying plates/tiles 5a that could cause detachment of the respective guide rails/tracks. In other words, the traction means 12, 15 are configured to pull the conveying plates 5a without ever pushing the plates 5a against one another to prevent the plates 5a lifting up from the respective guide rails even in the presence of disturbances (arising for example from dirt, thermal dilation, settling of the connections between the plates of the conveyor belts, gluing of the foam).

The correlation between the tensioning forces is achieved by setting equal tensioning between the two conveyor belts 5 (or by varying tensioning by the same amount on the upper conveyor belt 5 and on the lower conveyor belt 5). Nevertheless, there is provided to arrange a greater tensioning force acting on the lower conveyor belt 5 to allow for the greater load resulting from the weight of the panel (and from the weight of the two belts) and thus the greater revolving friction forces that weighs on the single conveying plates 5a of the lower conveyor belt 5 and, additionally, the pressure force (that affect both conveyor belts equally). The synchronization of the speeds and the correlation of the tensioning forces is a first (and basic) method of controlling the devices 6, 6', 6", 6"'. It is possible, according to the first control method (which does not involve using force transducer means), to set a (relatively small) speed difference between the two conveyor belts 5. This speed difference induces a cutting force in the foam that is not yet completely consolidated between the upper surface of the panel and the lower surface of the panel. The cutting force generates laminar cutting in the foam and offsets possible curving of the panel linked to the different density of the foam along the thickness of the foam.

In an apparatus provided with traction force transducer means it is nevertheless preferable to set a greater traction difference and, if it is not sufficient, and also set the speed difference on the lower conveyor belt 5 to avoid longitudinal curves of the panel downwards that may cause obstacles on roller conveyors (which are not illustrated) placed at the outlet of the double conveyor belt.

A second level of control of the devices 6, 6', 6", 6"' also detects the traction forces directly by load cells installed on the dragging screw (as in the illustrated embodiments). Also in this case, the synchronized speeds of the two conveyor belts and correlated tensioning forces are set by the control unit U. For this second control (and monitoring) method, direct measuring of the traction forces also enables it to be calculated how much the traction force difference is due to the friction forces on the two conveyor belts and how much to the other forces arising from disturbances (e.g. from dirt, thermal dilation, gluing of the foam).

It is thus possible, by the control unit U, to set tensioning forces that are different and act so as to compensate, with respect to the set desired tensioning, for all the listed disturbances and also the differential dilation of the support structures 4 that require the preload to be adjusted.

In other words, it is possible (in an apparatus devoid of force transducer means on the traction means), to control the upper and lower conveyor belt 5 units by the control unit U so as to have: reference speed values that are the same and the possibility of adding a speed difference to offset tendencies of the panel to bend. In an apparatus provided with force transducer means on the traction means, finer adjustment of the simple speed difference is possible, in particular, by controlling a difference of the greatest traction force by avoiding further possible sliding between the conveying plates of the conveyor belt 5 and the surface of the differential panel of the traction force and thus prevent longitudinal curvature the panel exiting the double conveyor belt 5.

The longitudinal curvature of the panel can be caused by the difference of the thrust arising from the expansion pressure of the foam and by the cutting forces that occur in a longitudinal direction, in particular if the panel is thicker than 40 mm, between the foam in contact with and near the containing surface of the outer lower layer and the foam in contact with and near the coating (and containing) surface of the outer upper layer; and a suitable tensioning force so as to prevent distinct traction forces between the upper and lower conveyor belt being able to cause jerking movements or misalignment of the conveying plates 5a of each conveyor belt 5 due to a lack of appropriate tensioning and thus undesired deformation of and/or curving effects on the panel being manufactured.

As mentioned, each of the support structures 4 can comprise a third curved guide portion 4e and a fourth curved guide portion 4f opposite the first curved guide portion 4c and the second curved guide portion 4d respectively. Third force transducer means 22 configured, in particular, to detect an adjustable and presettable longitudinal tensioning force acting on the conveyor belt 5 (in particular, on the curved head opposite the head where the drive and thrust unit is arranged) can be interposed between the frame 4a, 4b and either between the third curved guide portion 4e and the fourth curved guide portion 4f.

In other words, the third force transducer means 22 can be positioned on the end opposite the support structure 4 in which the device 6, 6', 6", 6"' is provided. The third force transducer means 22 can include one or more load cells.

In particular, the curved guide and return guide portions 4c, 4d are positioned at the inlet of the panel in the double belt so that there are no heads that are longitudinally movable in this section to prevent such a possible movement causing unexpected deformation or strain problems for the strips (or flexible coating belts) that form outer covering layers of the panel, which could get damaged and tear with great harm to the production process.

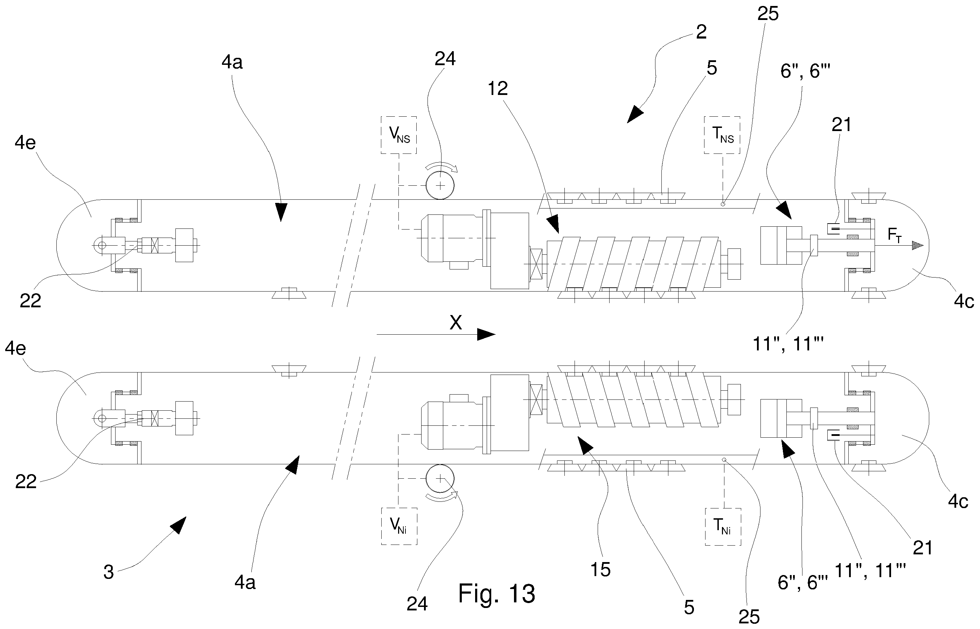

The apparatus 1 can further comprise speed detecting means 24 (Figure 13) suitable for measuring a running speed for each conveyor belt 5. The speed detecting means 24 can be applied to the traction means 12, 15 or directly to the conveyor belt 5 (for example by a measuring wheel) to detect a running speed of each conveyor belt 5.

The apparatus 1 can further comprise temperature detecting means 25 (Figure 13) applied to at least one section of the frame 4a, 4b of each conveyor belt 5 to detect the temperature (in particular of the air) at this section. Additionally or alternatively, it is possible to provide temperature detecting means 25 that is suitable for detecting directly the temperature of the inner surface of the plates of the conveyor belt in at least one section for each conveyor belt 5. The temperature detecting means 25 can be positioned at the guide rails 14a, 14b on which the conveying plates of the conveyor belt 5 run.

The control unit U can be configured to set reference speed values for the two upper and lower conveyor belts 5 and differentiation thereof, traction force F_{TS} value differences between the two conveyor belts 5, benchmark tensioning force values F_{T} applied to the tensioning devices of the two upper and lower conveyor belts 5 and differentiation thereof. The control and command unit U can be further configured to set temperature values for the sections of the two upper and lower conveyor belts 5.

The control unit U can be configured, in particular, to compare the dilation detected by the dilation detecting means 35 with the temperature detected by the temperature detecting means 25.

The control unit U can be configured, in particular, to compare the dilation detected by the dilation detecting means 35 with the corresponding movement detected by the longitudinal displacement transducer means 21.

The control unit U can be further configured, in particular, to receive, sample and store for each conveyor belt 5 signals coming from the speed detecting means 24.

The control unit U is configured, in particular, to sample the signals coming from the first force transducer means 11', 11", 11"' (to measure tensioning) and/or the second force transducer means 13 (to measure the traction force) and/or the third force transducer means 22 and/or the displacement transducer means 21 in one or more sampling ranges.

Sampling is conducted continuously and stored according to digital sampling means by specific software that compares said sampled values with recursion, in particular for a series of sampling ranges each of which can be comprised between 30 and 200 seconds in duration, and compares one or more average values (force or movement) determined on the basis of one or more ranges with the aforesaid preset limit values.

The control unit U can be further configured to compare, for each conveyor belt 5, a tensioning force F_{T} variation detected and a speed difference detected with respective preset limit values and to report for each conveyor belt 5, the possible overcoming of one or more of these preset limit values and perform a diagnosis of modification of speed and tensioning settings of the respective conveyor belt 5 by the respective traction means 12, 15.

The apparatus 1 can further comprise a user graphic interface (GUI) to display the signals (coming from the first force transducer means 11', 11", 11"' and/or from the second force transducer means 13 and/or from the third force transducer means 22 and/or from the longitudinal displacement transducer means 21) digitally or graphically according to the time and to compare, for each conveyor belt 5, a detected traction force F_{TS} variation, a detected tensioning force F_{T} variation and a movement detected with respective preset limit values, and to report for each conveyor belt 5, any exceeding of one or more of these preset limit values and to perform a preventive maintenance diagnosis.

In addition or alternatively, the graphic interface can be configured to show the signals detected by the first, second and third force transducer means and by the longitudinal displacement transducer means, according to the time (by way of non-limiting example: the detected traction force F_{TS} signals and traction force F_{TS} difference signals of the two conveyor belts 5, speed and speed difference signals of the two conveyor belts 5), so as to show an operator the effect of speed on the traction forces and of the traction difference on the speed difference.

In addition or alternatively, the graphic interface can be configured to show the signals detected by the first, second and third force transducer means and by the longitudinal displacement transducer means, according to the temperature detected by the temperature detecting means 25, so as to show an operator the effect of dilation and of the corresponding support structure 4 on the tensioning force F_{T} and on the greatest traction force F_{TS}.

In addition or alternatively, the graphic interface can be configured to show the signals detected by the first, second and third force transducer means and by the longitudinal displacement transducer means, in function of the speed of each conveyor belt. The control unit U can be configured to calculate and supply at the outlet (available for the operators) in digital or graphic form, according to the time, the forces that act in the apparatus 1, in particular along each conveyor belt 5 (Figure 12).

In particular, the following parameters can be identified in the apparatus:

| | |
|---|---|
| F_{T}= | tensioning force measured at the drive and thrust unit 7, 7', 7", 7‴ by the force transducer means 11', 11", 11‴; |
| F_{T}/2 = | tensioning force of the longitudinal tensioning force on the upper and lower branches of the conveyor belt 5; |
| N₀ = | periodic disturbance detected in the longitudinal tensioning force; |
| F_{B} = | rolling and friction force acting on the return branch of the conveyor belt 5; |
| V_{NS} = | speed measured by speed detecting means in contact with the return surface of the conveyor belt 5; |
| T_{NS} = | temperature measured in at least one section of the frame 4a, 4b of the conveyor belt 5; |
| F_{TS} = | traction force measured at the traction means 12, 15; |
| N₁ = | periodic disturbance detected in the traction force; |
| F_{PB} = | rolling friction and dragging force of the panel acting on the conveyor belt 5 at the conveying zone of the panel; |
| F_{C} = | further tensioning force measured by the third force transducer means 22; |
| N₂ = | periodic disturbance measured by the third force transducer means 22; |
| V_{NS} = | detected speed of the upper conveyor belt 5; |
| V_{Ni} = | detected speed of the lower conveyor belt 5; |
| T_{NS} = | detected temperature of the upper conveyor belt 5; |
| T_{Ni} = | detected temperature of the lower conveyor belt 5; |
| Y_{TS} = | movement (stroke) of the drive and thrust unit. |

Further, the following parameters can be calculated (by the control unit U): F_{B} = F_{C} - F_{TS} + F_{PB}, F_{PB} = F_{TS} - F_{T/2}.

The friction forces F_{PB} give the measure of the force exerted on the surfaces of the conveyor belt 5 to contain the panel and can be freed of the rolling and attrition force F_{B} (and thus be correlated with the expansion pressure of the foam).

The parameters F_{B} and F_{PB} (once digitalized and provided digitally or graphically) provide information on the thrust that the foam exerts on the two conveyor belts 5 in the conveying zone and on possible setting faults of the speed, temperature and differentiated traction force F_{TS} parameters, which faults can give rise to defects in the panel like for example curvature at the outlet or poor adhesion of the foam to the cover surfaces.

The friction forces and the periodic disturbance N₀ (once digitalized) can be analyzed according to frequency, for example by processing the signals by the digital Fourier transform. Depending on the size of peaks thereof and the period thereof compared with the speed of the conveyor belt 5, the friction forces and the periodic disturbance N₀ provide information on possible problems of dirt that has accumulated on the single conveying plates of the conveyor belt and/or rolling problems.

Also the friction forces and the periodic disturbance N₂ (once digitalized) can be analyzed according to frequency, for example, by processing the signals by digital Fourier transform. Depending on the size of the peaks thereof and the period thereof compared with the speed of each conveyor belt, the friction forces and the periodic disturbance N₂ provide information on possible problems of movement and sliding of the conveying plates in contact with the surfaces of the panel and/or rolling problems.

The periodic disturbance N₁ detected on the transducer (second force detecting means 13) applied to the traction means 12, 15 of each conveyor belt 5 (once digitalized) can be analyzed according to frequency, for example, by processing the signals by the digital Fourier transform. Depending on the size of the peaks thereof and of the period thereof compared with the rotation speed of the traction means 12, 15 of each conveyor belt 5, the value of the periodic disturbance N₁ provides information about possible movement problems of the traction means 12, 15 and/or meshing with the pitch of the feed screw 12a.

The graphic interface can be configured to show (graphically) the signals detected by the first, second and third force transducer means and by the longitudinal displacement transducer means, depending on the frequency (by processing the signals by the Fourier transform) so as to facilitate the recognition - by an operator - of irregular operating peaks (for example, force peaks) and thus permit a preventive maintenance diagnosis.

The graphic shape shown by the graphic interface can include a comparison of the period of selected peaks with the speed of the conveyor belt 5 or of the traction means 12, 15 so as to show the pitch thereof to thus enable the element to be identified that causes the peak under examination in the frequency field.

The graphic interface can be configured to show (in graphic or digital form), for the lower conveying unit 3, the data detected by the dilation detecting means 35 that indicate the dilation of the support structure 4 of the apparatus 1 with respect to the foundations 29 (foundation plates) of the apparatus 1, the data detected by the position transducer means 21 that indicate the corresponding movement between the frame 4a, 4b and the first and second curved guide portion 4c, 4d, and the data detected by the temperature detecting means 25 that indicate the temperature of the conveyor belt 5.

The detected and displayed data relating to a thermal transient of the apparatus 1 can show that the apparatus 1 is moving towards the thermal regime, this occurs in particular when the dilation ratio Δs/Δt becomes less over time than a set threshold.

A dilation trend over time characterized by step peaks and discontinuity indicates that a fault has occurred or that there is an obstacle.

A method is disclosed below for actuating, controlling and monitoring the state of tensioning and traction of an apparatus 1 for the continuous production of a panel.

The method thus comprises using the apparatus 1 provided with a pair of support structures 4, each of which supports a moving closed-loop conveyor belt 5 suitable for contacting a respective outer surface of the panel to drag the panel along the advancement direction X.

The production method further involves, for each support structure 4, activating the drive and thrust unit 7, 7', 7", 7"' to move a first curved guide and return portion 4c with respect to the frame 4a, 4b and transmit (synchronously) the movement of the first curved guide and return portion 4c to the second curved guide and return portion 4d so that a movement of the first curved guide and return portion 4c is matched by an identical movement of the second curved guide and return portion 4d.

Further, there is a step of setting a tensioning force F_{T} (or the further tensioning force F_{C}) acting on the conveyor belt 5. This setting is set either by a passive mechanical device (like the drive and thrust unit indicated by reference 7) and/or by an active actuating device (like the drive and thrust unit indicated by one of references 7',7", 7‴).

The particular configuration of the device 6, 6', 6", 6‴, in particular through the coupling and transmission unit 9, ensures the same movement along the advancement direction X of the panel of both the first curved guide and return portion 4c and the second curved guide and return portion 4d with respect to the frame 4a, 4b, synchronizing the movement thereof and applying uniform tensioning to the conveyor belt 5 (in all sections thereof).

A setting step can also be provided with detection of a tensioning force F_{T} (or of the further tensioning force F_{C}) acting on the conveyor belt 5 and a feedback control step for controlling the drive and thrust unit 7', 7", 7"' to reach and maintain a preset tensioning force value.

As disclosed above, this tensioning force F_{T} (or the further tensioning force F_{C}) is measured at at least one of the curved guide portions of at least one of the two conveyor belts 5.

Applying the first force transducer means 11', 11",11"' (load cells) to the drive and thrust unit 7', 7", 7‴ enables the tensioning thrust applied to conveyor belts 5 to be detected, monitored, controlled and adjusted through continuous feedback.

There can also be a step of detecting the traction force F_{TS} acting on the traction means 12, 15 that is controlled with the same speed reference and a traction force difference F_{TS} acting on the traction means 12, 15 of one of the conveyor belts 5 with respect to the other to control the longitudinal curvature of the panel outside the double conveyor belt arising from the polymerization differences of the layer of foam is commanded in a correlated manner.

The method further involves differentiating the forces F_{PB} that act on the upper outer coating layer of the panel from the homologous ones that act on the lower outer coating layer by acting on the control of the respective drive and thrust units according to preset threshold values to compensate with these differences for the tendency of the panel to bend longitudinally ("banana effect") because of the variation in density of the foam along the thickness of the panel, by thus providing a solution that is able to ensure the production of a panel that has high quality standards, in particular of a product that is free of curving faults. In order to obtain and accentuate the same control effect on the on the longitudinal curvature of the exiting panel, in addition to the traction force difference it is possible to control in a closed loop a speed difference on the traction means 12, 15 of one of the conveyor belts 5.

The method further enables the rolling and attrition force F_{B} to be calculated that affects the return part of the conveyor belt 5 and the rolling and attrition force F_{PB} that depends on the thrust exerted on the conveyor belts 5 in the conveying zone of the panel by the foam generated by the mixture of reagent resin. The indirect measurement of the forces F_{B} and F_{PB} further enables the effect of the thrust of the expanded foam on the conveyor belts 5 to be monitored (indirectly) so as to assess the impact of this thrust on correctly controlling the force imposed by the traction means 12, 15.

A correlated control is further provided of the longitudinal tensioning force F_{T} exerted by the drive and thrust unit 7', 7", 7"' in function of the greatest traction force F_{TS} acting on the traction means 12, 15 of the apparatus 1 and of the further tensioning force F_{C} acting on the curved guide portion (third curved guide portion 4e and/or fourth curved guide portion 4f) opposite the device 6, 6', 6", 6‴ such that the longitudinal tensioning force F_{T} generates, during operation, a further tensioning force F_{C} value that is greater than a set threshold value that ensures correct tensioning of the conveyor belt along the entire extent thereof. The further tensioning force F_{C} that is affected by the rolling and friction forces F_{B} and F_{PB} (the force F_{PB}, as disclosed, depends on the thrust exerted on the conveyor belts 5 by the foam generated by the mixture of reagent resin).

In the case of pre-programmed or preset tensioning without feedback control of the longitudinal tensioning force F_{T}, the method can comprise detecting one or more approximate tensioning values of each of the conveyor belts 5 and a comparison step, for each conveyor belt 5, of a variation of one or more forces detected with the reporting of a possible exceeding or one or more preset tensioning limit values. There is provided for implementing a modifications diagnosis of the tensioning settings of the respective conveyor belt 5.

One or more conveyor belt 5 speed values can be further detected and for each conveyor belt 5 a detected speed difference can be compared with respective preset speed limit values and then possible exceeding of one or more of the preset speed limit values can be reported for each conveyor belt 5, and then a modification diagnosis of the speed settings of the respective conveyor belt 5 can be conducted.

Further, the signals can be displayed digitally or graphically according to time and/or frequency and for each conveyor belt 5, signals (or average values of the signals) corresponding to the force values F_{TS}, F_{T}, F_{B}, F_{C}, F_{PB}, can be compared with preset limit values and the reporting for each conveyor belt 5, of the possible exceeding of one or more of the preset limit values and then a preventive maintenance diagnosis can be conducted.

Further, the further displacement transducer means 21 enables the extent of elongation of each conveyor belt 5 over time (arising from the settling of the joints between one plate of the conveyor belt and the next) to be detected and supplied (digitally or graphically) and the periodic movements arising from the transit of each conveying plate 5a on the curved guide and return portions to be detected and supplied (digitally or graphically).

Further, providing dilation transducer means 35 and displacement transducer means 21 enables the corresponding elongation difference of the conveyor belt 5 (measured by the displacement transducer means 21) with respect to the dilation of the support structure 4 (measured by the dilation transducer means 35) over time to be detected and supplied (digitally or graphically) to detect possible exceeding of elongation threshold values and/or exceeding of threshold values of the longitudinal tensioning force F_{T}.

Detecting the loads on the drive and thrust unit 7', 7", 7‴ and on the traction means 12, 15 further enables traction energy to be saved and mechanical wear to the conveyor belts 5 to be reduced by minimizing the tensioning setting necessary to maintain a set speed of the conveyor belt 5 so as not to unnecessarily increase the load on the motor of the traction means 12, 15 of each conveyor belt 5.

## Claims

1. Apparatus (1) for the continuous production of a panel, comprising an upper conveyor belt (5) and a lower conveyor belt (5), of the closed loop type, suitable for contacting a respective outer surface of said panel to be driven along an advancement direction (X), said upper conveyor belt (5) and said lower conveyor belt (5) each being movable around a respective support structure (4) which comprises a frame (4a, 4b) supported by portal structures (26, 33) suitable for resting on respective foundations (29), and a pair of curved guide and return portions (4c, 4d) for the respective conveyor belt (5), said curved guide and return portions (4c, 4d) being arranged at an end of the respective frame (4a, 4b) and being movable, and displaceable in a synchronous manner relatively to the respective frame (4a, 4b), in which said apparatus (1) comprises at least one device (6; 6'; 6"; 6"') for actuating, controlling and monitoring the conditions of tensioning and traction of each conveyor belt (5), said device (6; 6'; 6"; 6‴) comprising, for each of said support structures (4), at least one drive and thrust unit (7; 7'; 7"; 7"') configured to apply an adjustable and presettable longitudinal tensioning force (F_{T}), parallel to said advancement direction (X), and to synchronously position the conjugated curved guide and return portions (4c, 4d) of each pair of curved portions (4c, 4d), **characterized in that** said apparatus (1) further comprising longitudinal displacement transducer means (21) configured to detect a relative displacement measured parallel to said advancement direction (X) between one of said frames (4a, 4b) and the first curved guide and return portion (4c) and/or the second curved guide and return portion (4d), said longitudinal displacement transducer means (21) being positioned between said frame (4a, 4b) and respectively said first curved guide and return portion (4c) and/or said second curved guide and return portion (4d), said longitudinal displacement transducer means (21) being applied to said drive and thrust group (7'; 7"; 7‴).

2. Apparatus (1) according to claim 1, comprising first force transducer means (11'; 11"; 11"') configured to detect a tensioning force (F_{T}) of said conveyor belt (5) measured parallel to said advancement direction (X), said first force transducer means (11'; 11"; 11‴) being applied to said drive and thrust group (7'; 7"; 7‴).

3. Apparatus (1) according to claim 2, comprising a control unit (U) configured to receive signals coming from said first force transducer means (11'; 11"; 11''') and configured to control - in an open loop or in feedback - said drive group (7'; 7"; 7"') to maintain a pre-established tensioning force value (F_{T}) and for sampling, storing and making accessible - in graphic or digital form - the tensioning force values, in particular converted into suitable units of measurement.

4. Apparatus (1) according to claim 3, comprising second force transducer means (13) configured to detect a traction force (F_{TS}) acting on traction means (12, 15) of said apparatus (1) suitable for moving a respective conveyor belt (5), wherein said control unit (U) is configured to receive further signals from said second force transducer means (13) and for sampling, storing and making accessible - in graphic or digital form - the traction force, in particular converted into suitable units of measurement; and wherein said control unit (U) is configured to receive said further signals from said second force transducer means (13) and correlate said further signals to said tensioning force value (F_{T}).

5. Apparatus (1) according to any one of the preceding claims, wherein each of said support structures (4) comprises a third curved guide and return portion (4e) and a fourth curved guide and return portion (4f) positioned at an end of the apparatus opposite to the end in which there are provided for said first curved guide and return portion (4c) and said second curved guide and return portion (4d) respectively, and wherein third force transducer means (22) is provided which is interposed between said frame (4a, 4b) and one of said third curved guide and return portion (4e) and a fourth curved guide and return portion (4f) and configured to detect a further longitudinal tensioning force (F_{C}) transmitted by said conveyor belt (5) to said third curved guide and return portion (4e) and said fourth curved guide and return portion (4f), said third curved guide and return portion (4e) and said fourth curved guide and return portion (4f) being longitudinally slidable with respect to said frame (4a, 4b).

6. Apparatus (1) according to claim 4 or according to claim 5 as appended to claim 4, wherein said control unit (U) is operatively connected to said first force transducer means (11'; 11"; 11"'), to said second force transducer means (13) and to said third force transducer means (22) and it is configured to control in feedback said device (6; 6'; 6"; 6‴) and said traction means (12, 15) of said apparatus (1) so as to adjust, in a correlated manner, the longitudinal tensioning force (F_{T}) exerted on each conveyor belt (5) and the traction force (F_{TS}) for each conveyor belt (5) so as to generate, during the operation, a value of said tensioning force (F_{T}) so as to keep the respective conveyor belt (5) stretched along the entire closed loop extension thereof and prevent the portions of the conveyor belt (5), downstream of the traction means along said advancement direction (X), from being exempted from the tensioning action.

7. Apparatus (1) according to claim 4 or according to claim 5 as appended to claim 4 or according to claim 6, wherein said control unit (U) is operatively connected to said first force transducer means (11'; 11"; 11"'), to said second force transducer means (13) and to said third force transducer means (22) and it is configured to control in feedback said device (6; 6'; 6"; 6"') and said traction means (12, 15) of said apparatus (1) so as to adjust, in a correlated manner, the longitudinal tensioning force (F_{T}) exerted on each conveyor belt (5) and the traction force (F_{TS}) for each conveyor belt (5) so as to generate and maintain - during operation - a differential value between the traction forces (F_{TS}) exerted on said outer surfaces of said panel between the two conveyor belts (5) and to provide - in digital or graphic form - said longitudinal tensioning force(F_{T}), said differential value, and said traction force (F_{TS}) as a function of time so that said differential value is within a preset range so as to compensate the tendency of said panel to curve longitudinally.

8. Apparatus (1) according to claim 4 or according to claim 5 as appended to claim 4 or according to claim 6 or according to claim 7, wherein said control unit (U) is operatively connected to control in a correlated manner both said traction means (12) associated with said upper conveyor belt (5) and said traction means (15) associated with said lower conveyor belt (5) so as to maintain a preset velocity difference between the two respective conveyor belts (5) to correct a potential tendency of the panel to curve longitudinally upon exit from said upper and lower conveyor belts (5); and comprising velocity detecting means (24) for each conveyor belt (5), and wherein said control unit (U) is further configured to receive, sample and store signals coming from said velocity detecting means (24) to compare, for each conveyor belt (5), a change of the detected tensioning force (F_{T}) and a detected velocity difference with respective preset limit values and to provide in digital or graphic form said velocity and said velocity difference as a function of time and perform a modification diagnosis of the velocity and tensioning settings of the respective conveyor belt (5) by means of respective traction means (12, 15).

9. Apparatus (1) according to claim 4 or according to claim 5 as appended to claim 4 or according to any one of claims 6 to 8, comprising means for dispensing a reactive mixture suitable for forming an inner layer of said panel and positioned in a conveying area between said upper conveyor belt (5) and said lower conveyor belt (5), and wherein said control unit (U) is configured to monitor - by means of said first force transducer means (11'; 11"; 11"') and said second force transducer means (13) - the thrust effect of the foam on said conveyor belts (5) and therefore control in a correlated manner both said traction means (12) associated with said upper conveyor belt (5) and the respective device (6; 6'; 6"; 6‴) and said traction means (15) associated with said lower conveyor belt (5) and the respective device (6; 6'; 6"; 6"').

10. Apparatus (1) according to any one of claims 5 to 9, wherein said control unit (U) is configured to receive, sample and store signals coming from said first force transducer means (11'; 11"; 11"'), from said second force transducer means (13) and said third force transducer means (22) to compare, for each conveyor belt (5), a change in one or more detected forces and report, for each conveyor belt (5), the potential exceeding of one or more preset limit values and perform a modification diagnosis of the velocity and tensioning settings of the respective conveyor belt (5) by means of the respective traction means (12, 15) and the respective devices (6; 6'; 6"; 6"').

11. Apparatus (1) according to claim 10 as appended to claim 8 or 9, comprising a user graphic interface to display said signals in digital or graphic form as a function of time and to compare, for each conveyor belt (5), a change in the detected tensioning force (F_{T}), a change in the further detected tensioning force (F_{C}), a change in the detected traction force (F_{TS}), a change in the calculated force (F_{B}, F_{PB}), detected displacement values, detected velocity values and detected temperature values with respective preset limit values, and report for each conveyor belt (5) the potential exceeding of one or more of said preset limit values and perform a preventive maintenance diagnosis.

12. Apparatus (1) according to claim 11 or according to claim 10 as appended to claim 8 or 9, wherein said control unit (U) is configured to perform a digital frequency analysis of the detected tensioning force (F_{T}) signals, of the detected further tensioning force (F_{C}) signals, of the detected traction force (F_{TS}) signals, of the displacement signals, and of the velocity signals so as to obtain values with periodic change around the detected mean value, and wherein said user graphic interface is configured to graphically display said values as a function of frequency and to graphically display the period of said values and compare it with a period associated with a velocity of said conveyor belt (5) so as to display frequency, period and pitch peaks of said signals as a function of time, and report, for each conveyor belt (5), the potential occurrence of malfunctions and perform a preventive maintenance diagnosis.

13. Apparatus (1) according to any one of the preceding claims, comprising at least two portal structures (26, 33) for supporting said frames (4a, 4b) and for the synchronised vertical adjustment of the distance between the upper and lower conveyor belts (5), said at least two portal structures (26, 33) being provided with columns with respective plate-like support feet (27, 34), said at least two portal structures (26, 33) comprising at least one fixed portal structure (26) which is stationary with respect to said foundations (29) and at least one further movable portal structure (33), said at least one fixed portal structure (26) being stationary with respect to said foundations (29) parallel and transversely with respect to said longitudinal direction (X) and said at least one further portal structure (33) being provided with supports which are slidably coupled with respect to said foundations (29) parallel to said longitudinal direction (X) allowing said frames (4a, 4b) to dilate without distortions; and further comprising temperature detecting means (25) applied to at least one section of said frames (4a, 4b) of said conveyor belt (5) to detect the temperature at said at least one section and/or the temperature of said conveyor belt (5), and dilation transducer means (35) provided for in said movable portal structure (33) and configured to measure a displacement deriving from a thermal dilation of at least one of said frames (4a, 4b) in said longitudinal direction (X) due to a temperature change; wherein said control unit (U) is configured to perform a comparison of said displacement detected by said dilation detecting means (35) with said temperature detected by said temperature detecting means (25) and/or with the relative displacement detected by said longitudinal displacement transducer means (21) and for providing said comparison in graphic or numeric form.

14. Method for performing, controlling and monitoring the conditions of tensioning and traction of an apparatus (1) for the continuous production of a panel comprising the steps of:
- providing said apparatus (1) with an upper conveyor belt (5) and a lower conveyor belt (5), of the closed loop type, suitable for contacting a respective outer surface of said panel to be driven along an advancement direction (X), said upper conveyor belt (5) and said lower conveyor belt (5) each being movable around a respective support structure (4) which comprises a frame (4a, 4b) supported by a portal structures (26, 33) suitable for resting on respective foundations (29), and a pair of curved guide and return portions (4c, 4d) for the respective conveyor belt (5), said curved guide and return portions (4c, 4d) being arranged at an end of the respective frame (4a, 4b) and being movable, and synchronously displaceable relatively to the respective frame (4a, 4b),
- monitoring the state of tensioning and traction for each conveyor belt (55) and, based on said monitoring, apply - for each pair of guides and return curved portions (4c, 4d) - a longitudinal tensioning force (F_{T}) which is adjustable and presettable parallel to said advancement direction (X) and synchronously position the conjugated curved guide and return portions (4c, 4d) of each pair of curved portions (4c, 4d) and wherein there is provided, **characterized in that** the method further comprises the step of:
- detecting, by longitudinal displacement transducer-means (21) a relative displacement - measured parallel to said advancement direction (X) - of one of said frames (4a, 4b) relative to the first curved guide and return portion (4c) and/or to the second curved guide and return portion (4d), said longitudinal displacement transducer-means (21) being positioned between said frame (4a, 4b) and respectively said first curved guide and return portion (4c) and/or said second curved guide and return portion (4d), said longitudinal displacement transducer-means (21) being applied to a drive and thrust group (7'; 7"; 7"') that exerts a tensioning longitudinal force (F_{T}) that is adjustble and presettable, parallel to said advancement direction (X) and that synchronously positions the conjugated curved guide and return portions (4c, 4d) of each pair of curved portions (4c, 4d).

15. Method according to claim 14, wherein there is provided detecting- by first force trasducer-means (11'; 11"; 11"') - a tensioning force (F_{T}) of said conveyor belt (5) measured parallel to said advancement direction (X), said first force trasducer-means (11'; 11"; 11‴) being applied to said drive and thrust group (7'; 7"; 7‴).

16. Method according to claim 14 or 15, wherein there is provided for, by means of a control unit (U), a step of detecting a displacement between at least two portal structures (26, 33) for supporting said frames (4a, 4b) in said longitudinal direction (X) so as to monitor a thermal dilation of said frames (4a, 4b) caused by a change in the temperature change of said apparatus (1).

## Patentansprüche

1. Einrichtung (1) zur kontinuierlichen Herstellung einer Platte, umfassend ein oberes Förderband (5) und ein unteres Förderband (5) vom Typ mit geschlossenem Regelkreis, die geeignet sind, eine jeweilige Außenoberfläche der Platte zu kontaktieren, um entlang einer Vorschubrichtung (X) angetrieben zu werden, wobei das obere Förderband (5) und das untere Förderband (5) jeweils um eine jeweilige Stützstruktur (4) beweglich sind, die einen Rahmen (4a, 4b) umfasst, der von Portalstrukturen (26, 33) gestützt wird, die geeignet sind, auf jeweiligen Fundamenten (29) zu ruhen, und ein Paar von gekrümmten Führungs- und Rückführabschnitten (4c, 4d) für das jeweilige Förderband (5), wobei die gekrümmten Führungs- und Rückführabschnitte (4c, 4d) an einem Ende des jeweiligen Rahmens (4a, 4b) angeordnet sind und beweglich und auf synchrone Weise relativ zu dem jeweiligen Rahmen (4a, 4b) verschiebbar sind, wobei die Einrichtung (1) mindestens eine Vorrichtung (6; 6'; 6"; 6"') zum Betätigen, Steuern und Überwachen der Bedingungen des Spannens und des Zugs jedes Förderbands (5) umfasst, wobei die Vorrichtung (6; 6'; 6"; 6"') für jede der Stützstrukturen (4), mindestens eine Antriebs- und Schubeinheit (7; 7'; 7"; 7"') umfasst, die konfiguriert ist, um eine einstellbare und voreinstellbare Längsspannkraft (F_{T}) aufzubringen, parallel zu der Vorschubrichtung (X), und um die konjugierten gekrümmten Führungs- und Rücklaufabschnitte (4c, 4d) jedes Paares von gekrümmten Abschnitten (4c, 4d) synchron zu positionieren, **dadurch gekennzeichnet, dass** die Einrichtung (1) ferner Längsverschiebungswandlermittel (21) umfasst, die konfiguriert sind, um eine relative Verschiebung zu erfassen, die parallel zu der Vorschubrichtung (X) zwischen einem der Rahmen (4a, 4b) und dem ersten gekrümmten Führungs- und Rücklaufabschnitt (4c) und/oder dem zweiten gekrümmten Führungs- und Rücklaufabschnitt (4d) gemessen wird, wobei die Längsverschiebungswandlermittel (21) zwischen dem Rahmen (4a, 4b) und jeweils dem ersten gekrümmten Führungs- und Rücklaufabschnitt (4c) und/oder dem zweiten gekrümmten Führungs- und Rücklaufabschnitt (4d) positioniert sind, wobei die Längsverschiebungswandlermittel (21) an die Antriebs- und Schubgruppe (7'; 7"; 7"') angelegt werden.

2. Einrichtung (1) nach Anspruch 1, umfassend erste Kraftwandlermittel (11'; 11"; 11'"), die konfiguriert sind, um eine Spannkraft (F_{T}) des Förderbandes (5) zu erfassen, die parallel zu der Vorschubrichtung (X) gemessen wird, wobei die ersten Kraftwandlermittel (11'; 11"; 11'") an die Antriebs- und Schubgruppe (7'; 7"; 7"') angelegt werden.

3. Einrichtung (1) nach Anspruch 2, umfassend eine Steuereinheit (U), die konfiguriert ist, um von den ersten Kraftwandlermitteln (11'; 11"; 11'") kommende Signale zu empfangen, und konfiguriert ist, um - in einem offenen Regelkreis oder mit Rückkopplung - die Antriebsgruppe (7'; 7"; 7"') zu steuern, um einen vorab festgelegten Spannkraftwert (F_{T}) aufrechtzuerhalten und zum Erfassen, Speichern und Zugänglichmachen - in grafischer oder digitaler Form - der Spannkraftwerte, insbesondere umgewandelt in geeignete Maßeinheiten.

4. Einrichtung (1) nach Anspruch 3, umfassend zweite Kraftwandlermittel (13), die konfiguriert sind, um eine Zugkraft (F_{TS}) zu erfassen, die auf Zugmittel (12, 15) der Einrichtung (1) wirkt, die zum Bewegen eines jeweiligen Förderbandes (5) geeignet sind, wobei die Steuereinheit (U) konfiguriert ist, weitere Signale von den zweiten Kraftwandlermitteln (13) zu empfangen und zum Abtasten, Speichern und Zugänglichmachen - in grafischer oder digitaler Form - der Zugkraft, insbesondere umgewandelt in geeignete Maßeinheiten; und wobei die Steuereinheit (U) konfiguriert ist zum Empfangen der weiteren Signale von dem zweiten Kraftwandlermittel (13) und zum Korrelieren der weiteren Signale mit dem Spannkraftwert (F_{T}).

5. Einrichtung (1) nach einem der vorstehenden Ansprüche, wobei jede der Stützstrukturen (4) einen dritten gekrümmten Führungs- und Umlenkabschnitt (4e) und einen vierten gekrümmten Führungs- und Umlenkabschnitt (4f) umfasst, die an einem Ende der Einrichtung positioniert sind, das dem Ende gegenüberliegt, in dem der erste gekrümmte Führungs- und Umlenkabschnitt (4c) bzw. der zweite gekrümmte Führungs- und Umlenkabschnitt (4d) bereitgestellt sind, und wobei ein drittes Kraftwandlermittel (22) bereitgestellt ist, das zwischen dem Rahmen (4a, 4b) und einem von dem dritten gekrümmten Führungs- und Umlenkabschnitt (4e) und einem vierten gekrümmten Führungs- und Umlenkabschnitt (4f) eingefügt ist und konfiguriert ist zum Erfassen einer weiteren Längsspannkraft (F_{C}), übertragen durch das Förderband (5) auf den dritten gekrümmten Führungs- und Rückführabschnitt (4e) und den vierten gekrümmten Führungs- und Rückführabschnitt (4f), wobei der dritte gekrümmte Führungs- und Rückführabschnitt (4e) und der vierte gekrümmte Führungs- und Rückführabschnitt (4f) in Bezug auf den Rahmen (4a, 4b) in Längsrichtung verschiebbar sind.

6. Einrichtung (1) nach Anspruch 4 oder nach Anspruch 5 in Abhängigkeit von Anspruch 4, wobei die Steuereinheit (U) funktionell mit dem ersten Kraftwandlermittel (11'; 11"; 11"'), mit den zweiten Kraftwandlermitteln (13) und mit den dritten Kraftwandlermitteln (22) verbunden ist, und sie konfiguriert ist, um die Vorrichtung (6; 6'; 6"; 6"') und das Zugmittel (12, 15) der Einrichtung (1) in Rückkopplung zu steuern, um in einer korrelierten Weise die auf jedes Förderband (5) ausgeübte Längsspannkraft (F_{T}) und die Zugkraft (F_{TS}) für jedes Förderband (5) einzustellen, um während des Betriebs einen Wert der Spannkraft (F_{T}) ZU ERZEUGEN, UM das jeweilige Förderband (5) entlang seiner gesamten geschlossenen Regelkreisausdehnung gespannt zu halten und zu verhindern, dass die Abschnitte des Förderbandes (5) stromabwärts der Zugmittel entlang der Förderrichtung (X) von der Spannwirkung ausgenommen werden.

7. Einrichtung (1) nach Anspruch 4 oder nach Anspruch 5 in Abhängigkeit von Anspruch 4 oder nach Anspruch 6, wobei die Steuereinheit (U) funktionell mit dem ersten Kraftwandlermittel (11'; 11"; 11"'), mit den zweiten Kraftwandlermitteln (13) und mit den dritten Kraftwandlermitteln (22) verbunden ist, und sie konfiguriert ist, um die Vorrichtung (6; 6'; 6"; 6"') und das Zugmittel (12, 15) der Einrichtung (1) in Rückkopplung zu steuern, um auf korrelierte Weise die Längsspannkraft (F_{T}), die auf jedes Förderband (5) ausgeübt wird, und die Zugkraft (F_{TS}) für jedes Förderband (5) einzustellen, um - während des Betriebs - einen Differenzwert zwischen den Zugkräften (F_{TS}) zu erzeugen und aufrechtzuerhalten, die auf die Außenflächen der Platte zwischen den beiden Förderbändern (5) ausgeübt werden, und um - in digitaler oder grafischer Form - die Längsspannkraft (F_{T}), den Differenzwert und die Zugkraft (F_{TS}) als Funktion der Zeit bereitzustellen, sodass der Differenzwert innerhalb eines voreingestellten Bereichs liegt, um die Neigung der Platte, sich in Längsrichtung zu krümmen, auszugleichen.

8. Einrichtung (1) nach Anspruch 4 oder nach Anspruch 5 in Abhängigkeit von Anspruch 4 oder nach Anspruch 6 oder nach Anspruch 7, wobei die Steuereinheit (U) funktionell verbunden ist, um in einer korrelierten Weise sowohl die dem oberen Förderband (5) zugeordneten Zugmittel (12) als auch die dem unteren Förderband (5) zugeordneten Zugmittel (15) zu steuern, um eine voreingestellte Geschwindigkeitsdifferenz zwischen den beiden jeweiligen Förderbändern (5) aufrechtzuerhalten, um eine potenzielle Neigung der Platte, sich beim Austritt aus dem oberen und unteren Förderband (5) in Längsrichtung zu krümmen, zu korrigieren; und umfassend Geschwindigkeitserfassungsmittel (24) für jedes Förderband (5), und wobei die Steuereinheit (U) ferner konfiguriert ist, um Signale, die von den Geschwindigkeitserfassungsmitteln (24) kommen, zu empfangen, abzutasten und zu speichern, um für jedes Förderband (5) eine Änderung der erfassten Spannkraft (F_{T}) und eine erfasste Geschwindigkeitsdifferenz mit jeweiligen voreingestellten Grenzwerten zu vergleichen und in digitaler oder grafischer Form die Geschwindigkeit und die Geschwindigkeitsdifferenz als eine Funktion der Zeit bereitzustellen und eine Modifikationsdiagnose der Geschwindigkeits- und Spannungseinstellungen des jeweiligen Förderbandes (5) mittels jeweiliger Zugmittel (12, 15) durchzuführen.

9. Einrichtung (1) nach Anspruch 4 oder nach Anspruch 5 in Abhängigkeit von Anspruch 4 oder nach einem der Ansprüche 6 bis 8, umfassend Mittel zum Ausgeben einer reaktiven Mischung, die zur Bildung einer inneren Schicht der Platte geeignet ist, und die in einem Förderbereich zwischen dem oberen Förderband (5) und dem unteren Förderband (5) positioniert sind, und wobei die Steuereinheit (U) konfiguriert ist, um - mittels der ersten Kraftwandlermittel (11'; 11"; 11"') und der zweiten Kraftwandlermittel (13) - die Schubwirkung des Schaums auf die Förderbänder (5) zu überwachen und dadurch in korrelierter Weise sowohl die Zugmittel (12), die dem oberen Förderband (5) zugeordnet sind, als auch die jeweilige Vorrichtung (6; 6'; 6"; 6"') und das Zugmittel (15), die dem unteren Förderband (5) und der jeweiligen Vorrichtung (6; 6'; 6"; 6"') zugeordnet sind.

10. Einrichtung (1) nach einem der Ansprüche 5 bis 9, wobei die Steuereinheit (U) konfiguriert ist, um von den ersten Kraftwandlermitteln (11'; 11"; 11"'), von den zweiten Kraftwandlermitteln (13) und den dritten Kraftwandlermitteln (22) kommende Signale zu empfangen, abzutasten und zu speichern; um für jedes Förderband (5) eine Änderung einer oder mehrerer erfasster Kräfte zu vergleichen und für jedes Förderband (5) das potenzielle Überschreiten eines oder mehrerer voreingestellter Grenzwerte zu melden und eine Modifikationsdiagnose der Geschwindigkeits- und Spannungseinstellungen des jeweiligen Förderbandes (5) mittels der jeweiligen Zugmittel (12, 15) und der jeweiligen Vorrichtungen (6; 6'; 6"; 6"') durchzuführen.

11. Einrichtung (1) nach Anspruch 10 in Abhängigkeit von Anspruch 8 oder 9, umfassend eine grafische Benutzeroberfläche, um die Signale in digitaler oder grafischer Form als eine Funktion der Zeit anzuzeigen und um für jedes Förderband (5) eine Änderung der erfassten Spannkraft (F_{T}), eine Änderung der weiteren erfassten Spannkraft (F_{C}), eine Änderung der erfassten Zugkraft (F_{TS}), eine Änderung der berechneten Kraft (F_{B}, F_{PB}), erfasste Verschiebungswerte, erfasste Geschwindigkeitswerte und erfasste Temperaturwerte mit jeweiligen voreingestellten Grenzwerten zu vergleichen, und für jedes Förderband (5) das potenzielle Überschreiten eines oder mehrerer der voreingestellten Grenzwerte zu melden und eine vorbeugende Wartungsdiagnose durchzuführen.

12. Einrichtung (1) nach Anspruch 11 oder nach Anspruch 10 in Abhängigkeit von Anspruch 8 oder 9, wobei die Steuereinheit (U) konfiguriert ist, um eine digitale Frequenzanalyse der Signale der erfassten Spannkraft (F_{T}), der Signale der erfassten weiteren Spannkraft (F_{C}), der Signale der erfassten Zugkraft (F_{TS}), der Verschiebungssignale und der Geschwindigkeitssignale durchzuführen, um Werte mit periodischer Änderung um den erfassten Mittelwert zu erhalten, und wobei die grafische Benutzeroberfläche konfiguriert ist, um die Werte als eine Funktion der Frequenz grafisch anzuzeigen und die Periode der Werte grafisch anzuzeigen und sie mit einer Periode zu vergleichen, die einer Geschwindigkeit des Förderbandes (5) zugeordnet ist, um Frequenzspitzen, Periodenspitzen und Spitzen im Wiederholungsabstand der Signale als eine Funktion der Zeit anzuzeigen und für jedes Förderband (5) das potenzielle Auftreten von Fehlfunktionen zu melden und eine vorbeugende Wartungsdiagnose durchzuführen.

13. Einrichtung (1) nach einem der vorhergehenden Ansprüche, umfassend mindestens zwei Portalstrukturen (26, 33) zum Stützen der Rahmen (4a, 4b) und für die synchronisierte vertikale Einstellung des Abstands zwischen den oberen und unteren Förderbändern (5), wobei die mindestens zwei Portalstrukturen (26, 33) mit Säulen mit jeweiligen plattenartigen Stützfüßen (27, 34) versehen sind, wobei die mindestens zwei Portalstrukturen (26, 33) mindestens eine feste Portalstruktur (26) umfassen, die in Bezug auf die Fundamente (29) stationär ist, und mindestens eine weitere bewegliche Portalstruktur (33), wobei die mindestens eine feste Portalstruktur (26) in Bezug auf die Fundamente (29) parallel und quer in Bezug auf die Längsrichtung (X) stationär ist und die mindestens eine weitere Portalstruktur (33) mit Stützen versehen ist, die in Bezug auf die Fundamente (29) parallel zu der Längsrichtung (X) verschiebbar gekoppelt sind, was es den Rahmen (4a, 4b) ermöglicht, sich ohne Verformungen auszudehnen; und ferner umfassend Temperaturerfassungsmittel (25), die an mindestens einen Abschnitt der Rahmen (4a, 4b) des Förderbandes (5) angelegt werden, um die Temperatur an dem mindestens einen Abschnitt und/oder die Temperatur des Förderbandes (5) zu erfassen, und Ausdehnungswandlermittel (35), die in der beweglichen Portalstruktur (33) bereitgestellt sind und konfiguriert sind, um eine Verschiebung zu messen, die sich aus einer thermischen Ausdehnung von mindestens einem der Rahmen (4a, 4b) in der Längsrichtung (X) aufgrund einer Temperaturänderung ergibt; wobei die Steuereinheit (U) konfiguriert ist, um einen Vergleich der durch die Ausdehnungserfassungsmittel (35) erfassten Verschiebung mit der durch die Temperaturerfassungsmittel (25) erfassten Temperatur und/oder mit der durch die Längsverschiebungswandlermittel (21) erfassten relativen Verschiebung durchzuführen und den Vergleich in grafischer oder numerischer Form bereitzustellen.

14. Verfahren zum Durchführen, Steuern und Überwachen der Bedingungen des Spannens und des Zugs einer Einrichtung (1) zur kontinuierlichen Herstellung einer Platte, umfassend die Schritte:
- Versehen der Einrichtung (1) mit einem oberen Förderband (5) und einem unteren Förderband (5) vom Typ mit geschlossenem Regelkreis, die geeignet sind, eine jeweilige Außenoberfläche der entlang einer Vorschubrichtung (X) anzutreibenden Platte zu kontaktieren, wobei das obere Förderband (5) und das untere Förderband (5) jeweils um einen jeweiligen Stützkörper (4) beweglich sind, umfassend einen Rahmen (4a, 4b), der von Portalstrukturen (26, 33) getragen wird, die geeignet sind, auf jeweiligen Fundamenten (29) zu ruhen, und ein Paar von gekrümmten Führungs- und Umlenkabschnitten (4c, 4d) für das jeweilige Förderband (5), wobei die gekrümmten Führungs- und Umlenkabschnitte (4c, 4d) an einem Ende des jeweiligen Rahmens (4a, 4b) angeordnet sind und beweglich und synchron verschiebbar relativ zu dem jeweiligen Rahmen (4a, 4b) sind,
- Überwachen des Spannungs- und Zugzustands für jedes Förderband (55) und, basierend auf der Überwachung, Aufbringen - für jedes Paar von Führungen und gekrümmten Umlenkabschnitten (4c, 4d) - einer Längsspannkraft (F_{T}), die parallel zu der Vorschubrichtung (X) einstellbar und voreinstellbar ist, und synchrones Positionieren der konjugierten gekrümmten Führungs- und Umlenkabschnitte (4c, 4d) jedes Paars von gekrümmten Abschnitten (4c, 4d), **dadurch gekennzeichnet, dass** das Verfahren ferner den folgenden Schritt umfasst:
- Erfassen, durch Längsverschiebungswandlermittel (21), einer relativen Verschiebung - gemessen parallel zu der Vorschubrichtung (X) - eines der Rahmen (4a, 4b) relativ zu dem ersten gekrümmten Führungs- und Rücklaufabschnitt (4c) und/oder zu dem zweiten gekrümmten Führungs- und Rücklaufabschnitt (4d), wobei die Längsverschiebungswandlermittel (21) zwischen dem Rahmen (4a, 4b) und jeweils dem ersten gekrümmten Führungs- und Rücklaufabschnitt (4c) und/oder dem zweiten gekrümmten Führungs- und Rücklaufabschnitt (4d) positioniert sind, wobei die Längsverschiebungswandlermittel (21) an eine Antriebs- und Schubgruppe (7'; 7"; 7"') angelegt werden, die parallel zu der Vorschubrichtung (X) eine einstellbare und voreinstellbare Längsspannkraft (F_{T}) ausübt und die die konjugierten gekrümmten Führungs- und Rücklaufabschnitte (4c, 4d) jedes Paares von gekrümmten Abschnitten (4c, 4d) synchron positioniert.

15. Verfahren nach Anspruch 14, wobei ein Erfassen - durch erste Kraftaufnehmermittel (11'; 11"; 11'") - einer Spannkraft (F_{T}) des Förderbandes (5) bereitgestellt wird, die parallel zu der Vorschubrichtung (X) gemessen wird, wobei die ersten Kraftaufnehmermittel (11'; 11"; 11'") an die Antriebs- und Schubgruppe (7'; 7"; 7"') angelegt werden.

16. Verfahren nach Anspruch 14 oder 15, wobei mittels einer Steuereinheit (U) ein Schritt des Erfassens einer Verschiebung zwischen mindestens zwei Portalstrukturen (26, 33) zum Stützen der Rahmen (4a, 4b) in der Längsrichtung (X) bereitgestellt wird, um eine thermische Ausdehnung der Rahmen (4a, 4b) zu überwachen, die durch eine Änderung der Temperaturänderung der Einrichtung (1) verursacht wird.

## Revendications

1. Appareil (1) pour la production en continu d'un panneau, comprenant une bande transporteuse supérieure (5) et une bande transporteuse inférieure (5), du type à boucle fermée, approprié pour venir en contact avec une surface externe respective dudit panneau à entraîner le long d'une direction d'avancement (X), ladite bande transporteuse supérieure (5) et ladite bande transporteuse inférieure (5) étant chacune mobiles autour d'une structure de support (4) respective qui comprend un châssis (4a, 4b) supporté par des structures en portique (26, 33) appropriées pour reposer sur des fondations (29) respectives, et une paire de parties de guidage et de renvoi incurvées (4c, 4d) pour la bande transporteuse (5) respective, lesdites parties de guidage et de renvoi incurvées (4c, 4d) étant agencées à une extrémité du châssis (4a, 4b) respectif et étant mobiles, et déplaçables de manière synchrone par rapport au châssis (4a, 4b) respectif, dans lequel ledit appareil (1) comprend au moins un dispositif (6 ; 6' ; 6" ; 6‴) pour actionner, commander et surveiller les conditions de tension et de traction de chaque bande transporteuse (5), ledit dispositif (6 ; 6' ; 6" ; 6‴) comprenant, pour chacune desdites structures de support (4), au moins une unité d'entraînement et de poussée (7 ; 7' ; 7" ; 7‴) conçu pour appliquer une force de tension longitudinale ajustable et préréglable (F_{T}), parallèlement à ladite direction d'avancement (X), et pour positionner de manière synchrone les parties de guidage et de renvoi incurvées conjuguées (4c, 4d) de chaque paire de parties incurvées (4c, 4d), **caractérisé en ce que** ledit appareil (1) comprenant en outre des moyens transducteurs de déplacement longitudinal (21) conçus pour détecter un déplacement relatif mesuré parallèlement à ladite direction d'avancement (X) entre l'un desdits cadres (4a, 4b) et la première partie de guidage et de renvoi incurvée (4c) et/ou la seconde partie de guidage et de renvoi incurvée (4d), lesdits moyens transducteurs de déplacement longitudinal (21) étant positionnés entre ledit châssis (4a, 4b) et respectivement ladite première partie de guidage et de renvoi incurvée (4c) et/ou ladite seconde partie de guidage et de renvoi incurvée (4d), lesdits moyens transducteurs de déplacement longitudinal (21) étant appliqués audit groupe d'entraînement et de poussée (7' ; 7" ; 7‴).

2. Appareil (1) selon la revendication 1, comprenant des premiers moyens transducteurs de force (11' ; 11" ; 11‴) conçu pour détecter une force de tension (F_{T}) de ladite bande transporteuse (5) mesurée parallèlement à ladite direction d'avancement (X), lesdits premiers moyens transducteurs de force (11' ; 11" ; 11‴) étant appliqué audit groupe d'entraînement et de poussée (7' ; 7" ; 7‴).

3. Appareil (1) selon la revendication 2, comprenant une unité de commande (U) conçue pour recevoir des signaux provenant desdits premiers moyens transducteurs de force (11' ; 11" ; 11‴) et conçu pour commander - en boucle ouverte ou en rétroaction - ledit groupe d'entraînement (7' ; 7" ; 7‴) pour maintenir une valeur de force de tension préétablie (F_{T}) et pour échantillonner, stocker et rendre accessible - sous forme graphique ou numérique - les valeurs de force de tension, en particulier converties en unités de mesure appropriées.

4. Appareil (1) selon la revendication 3, comprenant des seconds moyens transducteurs de force (13) conçus pour détecter une force de traction (F_{TS}) agissant sur des moyens de traction (12, 15) dudit appareil (1) appropriés pour déplacer une bande transporteuse respective (5), dans lequel ladite unité de commande (U) est conçue pour recevoir d'autres signaux provenant desdits seconds moyens transducteurs de force (13) et pour échantillonner, stocker et rendre accessible - sous forme graphique ou numérique - la force de traction, en particulier convertie en unités de mesure appropriées ; et dans lequel ladite unité de commande (U) est conçue pour recevoir lesdits autres signaux provenant desdits seconds moyens transducteurs de force (13) et corréler lesdits autres signaux à ladite valeur de force de tension (F_{T}).

5. Appareil (1) selon l'une quelconque des revendications précédentes, dans lequel chacune desdites structures de support (4) comprend une troisième partie de guidage et de renvoi incurvée (4e) et une quatrième partie de guidage et de renvoi incurvée (4f) positionnées à une extrémité de l'appareil opposée à l'extrémité dans laquelle sont prévues ladite première partie de guidage et de renvoi incurvée (4c) et ladite deuxième partie de guidage et de renvoi incurvée (4d) respectivement, et dans lequel un troisième moyen transducteur de force (22) est prévu, lequel est interposé entre ledit châssis (4a, 4b) et l'une de ladite troisième partie de guidage et de renvoi incurvée (4e) et d'une quatrième partie de guidage et de renvoi incurvée (4f) et conçu pour détecter une force de tension longitudinale supplémentaire (F_{C}) transmis par ladite bande transporteuse (5) à ladite troisième partie de guidage et de renvoi incurvée (4e) et à ladite quatrième partie de guidage et de renvoi incurvée (4f), ladite troisième partie de guidage et de renvoi incurvée (4e) et ladite quatrième partie de guidage et de renvoi incurvée (4f) pouvant coulisser longitudinalement par rapport audit châssis (4a, 4b).

6. Appareil (1) selon la revendication 4 ou selon la revendication 5 telle que dépendante de la revendication 4, dans lequel ladite unité de commande (U) est connectée de manière fonctionnelle auxdits premiers moyens transducteurs de force (11' ; 11" ; 11‴), audit deuxième moyen transducteur de force (13) et audit troisième moyen transducteur de force (22) et il est conçu pour commander en rétroaction ledit dispositif (6 ; 6' ; 6" ; 6‴) et lesdits moyens de traction (12, 15) dudit appareil (1) de manière à ajuster, de manière corrélée, la force de tension longitudinale (F_{T}) exercée sur chaque bande transporteuse (5) et la force de traction (F_{TS}) pour chaque bande transporteuse (5) de façon à générer, pendant le fonctionnement, une valeur de ladite force de tension (F_{T}) de manière à maintenir la bande transporteuse (5) respective tendue le long de toute son extension en boucle fermée et empêcher les parties de la bande transporteuse (5), en aval des moyens de traction le long de ladite direction d'avancement (X), d'être soustraites à l'action de tension.

7. Appareil (1) selon la revendication 4 ou selon la revendication 5 telle que dépendante de la revendication 4 ou selon la revendication 6, dans lequel ladite unité de commande (U) est connectée de manière fonctionnelle audit premier moyen transducteur de force (11' ; 11" ; 11‴), audit deuxième moyen transducteur de force (13) et audit troisième moyen transducteur de force (22) et il est conçu pour commander en rétroaction ledit dispositif (6 ; 6' ; 6" ; 6‴) et lesdits moyens de traction (12, 15) dudit appareil (1) de manière à ajuster, de manière corrélée, la force de tension longitudinale (F_{T}) exercée sur chaque bande transporteuse (5) et la force de traction (F_{TS}) pour chaque bande transporteuse (5) de manière à générer et à maintenir - pendant le fonctionnement - une valeur différentielle entre les forces de traction (F_{TS}) exercée sur lesdites surfaces externes dudit panneau entre les deux bandes transporteuses (5) et pour fournir - sous forme numérique ou graphique - ladite force de tension longitudinale (F_{T}), ladite valeur différentielle, et ladite force de traction (F_{TS}) en fonction du temps de sorte que ladite valeur différentielle soit comprise dans une plage prédéfinie afin de compenser la tendance dudit panneau à s'incurver longitudinalement.

8. Appareil (1) selon la revendication 4 ou selon la revendication 5 telle que dépendante de la revendication 4 ou selon la revendication 6 ou selon la revendication 7, dans lequel ladite unité de commande (U) est reliée de manière fonctionnelle pour commander de manière corrélée à la fois lesdits moyens de traction (12) associés à ladite bande transporteuse supérieure (5) et lesdits moyens de traction (15) associés à ladite bande transporteuse inférieure (5) de façon à maintenir une différence de vitesse prédéfinie entre les deux bandes transporteuses (5) respectives afin de corriger une tendance potentielle du panneau à s'incurver longitudinalement à la sortie desdites bandes transporteuses supérieure et inférieure (5) ; et comprenant des moyens de détection de vitesse (24) pour chaque bande transporteuse (5), et dans lequel ladite unité de commande (U) est en outre conçue pour recevoir, échantillonner et stocker des signaux provenant desdits moyens de détection de vitesse (24) pour comparer, pour chaque bande transporteuse (5), une variation de la force de tension détectée (F_{T}) et une différence de vitesse détectée avec des valeurs limites prédéfinies respectives et pour fournir sous forme numérique ou graphique ladite vitesse et ladite différence de vitesse en fonction du temps et effectuer un diagnostic de modification des réglages de vitesse et de tension de la bande transporteuse (5) respective au moyen de moyens de traction (12, 15) respectifs.

9. Appareil (1) selon la revendication 4 ou selon la revendication 5 telle que dépendante de la revendication 4 ou selon l'une quelconque des revendications 6 à 8, comprenant des moyens pour distribuer un mélange réactif approprié pour former une couche interne dudit panneau et positionnés dans une zone de transport entre ladite bande transporteuse supérieure (5) et ladite bande transporteuse inférieure (5), et dans lequel ladite unité de commande (U) est conçue pour surveiller - au moyen desdits premiers moyens transducteurs de force (11' ; 11" ; 11‴) et lesdits seconds moyens transducteurs de force (13) - l'effet de poussée de la mousse sur lesdites bandes transporteuses (5) et par conséquent commander de manière corrélée à la fois lesdits moyens de traction (12) associés à ladite bande transporteuse supérieure (5) et le dispositif respectif (6 ; 6' ; 6" ; 6‴) et ledit moyen de traction (15) associé à ladite bande transporteuse inférieure (5) et le dispositif respectif (6 ; 6' ; 6" ; 6‴).

10. Appareil (1) selon l'une quelconque des revendications 5 à 9, dans lequel ladite unité de commande (U) est conçue pour recevoir, échantillonner et stocker des signaux provenant desdits premiers moyens transducteurs de force (11' ; 11" ; 11‴), provenant desdits deuxièmes moyens transducteurs de force (13) et desdits troisièmes moyens transducteurs de force (22) pour comparer, pour chaque bande transporteuse (5), un changement d'une ou plusieurs forces détectées et signaler, pour chaque bande transporteuse (5), le dépassement potentiel d'une ou plusieurs valeurs limites prédéfinies et effectuer un diagnostic de modification des réglages de vitesse et de tension de la bande transporteuse (5) respective au moyen des moyens de traction (12, 15) respectifs et des dispositifs (6 ; 6' ; 6" ; 6‴) respectifs.

11. Appareil (1) selon la revendication 10 telle que dépendante de la revendication 8 ou 9, comprenant une interface graphique utilisateur pour afficher lesdits signaux sous forme numérique ou graphique en fonction du temps et pour comparer, pour chaque bande transporteuse (5), une variation de la force de tension détectée (F_{T}), une variation de l'autre force de tension détectée (F_{C}), une variation de la force de traction détectée (F_{TS}), une variation de la force calculée (F_{B}, F_{PB}), des valeurs de déplacement détectées, des valeurs de vitesse détectées et des valeurs de température détectées avec des valeurs limites prédéfinies respectives, et signaler pour chaque bande transporteuse (5) le dépassement potentiel d'une ou plusieurs desdites valeurs limites prédéfinies et effectuer un diagnostic de maintenance préventive.

12. Appareil (1) selon la revendication 11 ou selon la revendication 10 telle que dépendante de la revendication 8 ou 9, dans lequel ladite unité de commande (U) est conçue pour effectuer une analyse fréquentielle numérique des signaux de la force de tension détectée (F_{T}), des signaux de la force de tension supplémentaire détectée (F_{C}), des signaux de la force de traction détectée (F_{TS}), des signaux de déplacement, et des signaux de vitesse de manière à obtenir des valeurs avec une variation périodique autour de la valeur moyenne détectée, et dans lequel ladite interface graphique utilisateur est conçue pour afficher graphiquement lesdites valeurs en fonction de la fréquence et pour afficher graphiquement la période desdites valeurs et la comparer à une période associée à une vitesse de ladite bande transporteuse (5) de manière à afficher les pics de fréquence, de période et de pas desdits signaux en fonction du temps, et signaler, pour chaque bande transporteuse (5), l'occurrence potentielle de dysfonctionnements et effectuer un diagnostic de maintenance préventive.

13. Appareil (1) selon l'une quelconque des revendications précédentes, comprenant au moins deux structures en portique (26, 33) pour supporter lesdits châssis (4a, 4b) et pour le réglage vertical synchronisé de la distance entre les bandes transporteuses supérieure et inférieure (5), lesdites au moins deux structures en portique (26, 33) étant pourvues de colonnes avec des pieds de support respectifs en forme de plaque (27, 34), lesdites au moins deux structures en portique (26, 33) comprenant au moins une structure en portique fixe (26) qui est immobile par rapport auxdites fondations (29) et au moins une autre structure en portique mobile (33), ladite au moins une structure en portique fixe (26) étant immobile par rapport auxdites fondations (29) parallèlement et transversalement par rapport à ladite direction longitudinale (X) et ladite au moins une autre structure en portique (33) étant pourvue de supports qui sont couplés de manière coulissante par rapport auxdites fondations (29) parallèlement à ladite direction longitudinale (X) permettant auxdits châssis (4a, 4b) de se dilater sans déformations ; et comprenant en outre des moyens de détection de température (25) appliqués à au moins une section desdits châssis (4a, 4b) de ladite bande transporteuse (5) pour détecter la température au niveau de ladite au moins une section et/ou la température de ladite bande transporteuse (5), et des moyens transducteurs de dilatation (35) prévus dans ladite structure en portique mobile (33) et conçus pour mesurer un déplacement résultant d'une dilatation thermique d'au moins l'un desdits châssis (4a, 4b) dans ladite direction longitudinale (X) en raison d'une variation de température ; dans laquelle ladite unité de commande (U) est conçue pour effectuer une comparaison dudit déplacement détecté par lesdits moyens de détection de dilatation (35) avec ladite température détectée par lesdits moyens de détection de température (25) et/ou avec le déplacement relatif détecté par lesdits moyens transducteurs de déplacement longitudinal (21) et pour fournir ladite comparaison sous forme graphique ou numérique.

14. Procédé pour actionner, commander et surveiller les conditions de mise en tension et de traction d'un appareil (1) pour la production en continu d'un panneau, comprenant les étapes consistant à :
- munir ledit appareil (1) d'une bande transporteuse supérieure (5) et d'une bande transporteuse inférieure (5), du type à boucle fermée, appropriées pour venir en contact avec une surface externe respective dudit panneau à entraîner le long d'une direction d'avancement (X), ladite bande transporteuse supérieure (5) et ladite bande transporteuse inférieure (5) étant chacune mobiles autour d'une structure de support (4) respective qui comprend un châssis (4a, 4b) supporté par des structures en portique (26, 33) appropriées pour reposer sur des fondations (29) respectives, et une paire de parties de guidage et de renvoi incurvées (4c, 4d) pour la bande transporteuse (5) respective, lesdites parties de guidage et de renvoi incurvées (4c, 4d) étant agencées à une extrémité du châssis (4a, 4b) respectif et étant mobiles, et déplaçables de manière synchrone par rapport au châssis (4a, 4b) respectif,
- surveiller l'état de tension et de traction pour chaque bande transporteuse (55) et, sur la base de ladite surveillance, appliquer - pour chaque paire de parties de guidage et de renvoi incurvées (4c, 4d) - une force de tension longitudinale (F_{T}) qui est ajustable et préréglable parallèlement à ladite direction d'avancement (X) et positionner de manière synchrone les parties de guidage et de renvoi incurvées conjuguées (4c, 4d) de chaque paire de parties incurvées (4c, 4d) et dans lequel il est prévu, **caractérisé en ce que** le procédé comprend en outre l'étape consistant à :
- détecter, par des moyens transducteurs de déplacement longitudinal (21) un déplacement relatif - mesuré parallèlement à ladite direction d'avancement (X) - de l'un desdits châssis (4a, 4b) par rapport à la première partie de guidage et de renvoi incurvée (4c) et/ou à la seconde partie de guidage et de renvoi incurvée (4d), lesdits moyens transducteurs de déplacement longitudinal (21) étant positionnés entre ledit châssis (4a, 4b) et respectivement ladite première partie de guidage et de renvoi incurvée (4c) et/ou ladite seconde partie de guidage et de renvoi incurvée (4d), lesdits moyens transducteurs de déplacement longitudinal (21) étant appliqués à un groupe d'entraînement et de poussée (7' ; 7" ; 7‴) qui exerce une force longitudinale de tension (F_{T}) qui est ajustable et préréglable, parallèlement à ladite direction d'avancement (X) et qui positions de manière synchrone les parties de guidage et de renvoi incurvées conjuguées (4c, 4d) de chaque paire de parties incurvées (4c, 4d).

15. Procédé selon la revendication 14, dans lequel est prévue la détection - par des premiers moyens transducteurs de force (11' ; 11" ; 11‴) - une force de tension (F_{T}) de ladite bande transporteuse (5) mesurée parallèlement à ladite direction d'avancement (X), lesdits premiers moyens transducteurs de force (11' ; 11" ; 11‴) étant appliqué audit groupe d'entraînement et de poussée (7' ; 7" ; 7‴).

16. Procédé selon la revendication 14 ou 15, dans lequel il est prévu, au moyen d'une unité de commande (U), une étape de détection d'un déplacement entre au moins deux structures en portique (26, 33) pour supporter lesdits châssis (4a, 4b) dans ladite direction longitudinale (X) de manière à surveiller une dilatation thermique desdits châssis (4a, 4b) causée par une variation de température dudit appareil (1).
